# EUROPEAN PATENT APPLICATION

(11) **EP 4 209 960 A1**
(43) Date of publication of application: **12.07.2023**
(21) Application number: 21874105.6
(22) Date of filing: 17.08.2021
(51) Int. Cl.: G06K 9/00, G08G 1/0967, G08G 1/0969

(54) **REPORTED INFORMATION PROCESSING METHOD, DEVICE AND SYSTEM**

(30) Priority: 30.09.2020 CN 202011069497
(71) Applicant: Huawei Technologies Co., Ltd., Shenzhen, Guangdong 518129 (CN)
(72) Inventor: MA, Tao, Shenzhen, Guangdong 518129 (CN); LIU, Jianqin, Shenzhen, Guangdong 518129 (CN); SONG, Sida, Shenzhen, Guangdong 518129 (CN)
(74) Representative: Maiwald GmbH
(86) International application number: PCT/CN2021/113110
(87) International publication number: WO 2022/068443

(57) **Abstract**

A method, an apparatus, and a system for processing reported information are disclosed, to provide an efficient and accurate manner for processing a plurality of pieces of recognition information reported for the same target. The method includes: A cloud server receives N pieces of recognition information of a target object from N collection apparatuses, where N is a positive integer, and the recognition information includes a recognition result of the target object, a confidence value, and a confidence type; divides the N pieces of received recognition information into M groups based on the confidence type, where M is a positive integer not greater than N; determines group recognition information corresponding to each of the M groups; and selects one piece of group recognition information, and determines a recognition result in the selected recognition information as a final result of the target object. Based on the method, the cloud server may select and compare the confidence values in the recognition information based on the confidence types in the received recognition information, to obtain a more accurate final result of the target object, thereby effectively improving accuracy of the result.

## Description

### CROSS-REFERENCE TO RELATED APPLICATIONS

This application claims priority to Chinese Patent Application No. 202011069497.4, filed with the China National Intellectual Property Administration on September 30, 2020 and entitled "METHOD, APPARATUS, AND SYSTEM FOR PROCESSING REPORTED INFORMATION", which is incorporated herein by reference in its entirety.

### TECHNICAL FIELD

This application relates to the field of information collection technologies, and in particular, to a method, an apparatus, and a system for processing reported information.

### BACKGROUND

High-definition maps are often applied in a travel process, to help travelers and self-driving vehicles make more accurate decisions. Because an increasingly high requirement is imposed on accuracy of the high-definition maps, data needs to be frequently collected, and the high-definition maps need to be updated in time based on the collected data.

Currently, in a data information collection process of the high-definition map, a static part of the high-definition map is usually first drawn in a centralized collection manner, and then the drawn high-definition map is updated and improved in a crowdsourcing collection manner.

However, in the crowdsourcing collection mode, recognition information that is of a target object and that is reported by a plurality of vehicles needs to be collected, and different vehicles have different recognition capabilities and different recognition precision. Therefore, for the same target, different vehicles may have different report results. As a result, it is more difficult for a cloud server to determine an accurate result of the target object. For example, it is assumed that the target object is an 80 km/h speed limit sign beside a road. One vehicle recognizes the target object as an 80 km/h speed limit sign, while another vehicle may mistakenly recognize the target object as a 60 km/h speed limit sign. After receiving different recognition results of the same target object, the cloud server needs to determine which result is to be trusted, and update the result to the map. If the result is not properly selected, an error may be caused, thereby causing a potential risk to transportation safety.

However, currently the cloud server does not have an accurate and effective processing method for a plurality of pieces of received recognition information of the same target object.

### SUMMARY

This application provides a method, an apparatus, and a system for processing reported information, to efficiently and accurately process reported information.

It should be understood that the method for processing reported information provided in embodiments of this application may be performed by the apparatus and the system for processing reported information.

The system for processing the reported information includes a cloud server and a collection apparatus.

The cloud server may be a server having a processing function, for example, a central processing unit; or may be a processing chip in a server. Specifically, the cloud server is not limited in embodiments of this application.

It should be understood that there are a plurality of cases of the collection apparatus provided in embodiments of this application. The collection apparatus may be a separate apparatus, or may be a combination of at least two apparatuses.

For example, the collection apparatus may be at least one mobile collection apparatus, or may be at least one fixed collection apparatus, or may be a combination of at least one mobile collection apparatus and at least one fixed collection apparatus.

In a possible implementation, the fixed collection apparatus is a roadside unit (road side unit, RSU).

For example, in embodiments of this application, the RSU is an apparatus for performing collection for a target object, determining recognition information of the target object, and reporting the recognition information of the target object.

Preferably, the RSU integrates one or more of sensors such as a camera, a radar, and a GPS receiver; and has a collection function, a processing function, receiving and sending functions, and the like.

When performing the method for processing reported information, the RSU performs collection for a target object by using a camera and/or a sensor in the RSU. A processor in the RSU determines recognition information of the target object based on collected information. The recognition information includes a recognition result of the target object, a confidence value of the recognition result, and a confidence type used for determining the confidence value. Then, the RSU sends the recognition information of the target object to a cloud server by using a transceiver in the RSU.

In a possible implementation, the fixed collection apparatus is a combination of an RSU and at least one sensor and/or camera.

For example, in this embodiment of this application, the RSU and the at least one sensor and/or camera are an apparatus for performing collection for a target object, determining recognition information of the target object, and reporting the recognition information of the target object.

When the RSU and the at least one sensor and/or camera perform the method for processing reported information, the RSU performs collection for a target object by using at least one external camera and/or sensor, and obtains information collected by the at least one camera and/or sensor. The RSU determines recognition information of the target object based on the collected information by using a processor in the RSU. The recognition information includes a recognition result of the target object, a confidence value of the recognition result, and a confidence type used for determining the confidence value. Then, the RSU sends the recognition information of the target object to a cloud server by using a transceiver in the RSU.

In a possible implementation, the fixed collection apparatus is a combination of a central processing unit and an RSU having a collection function and receiving and sending functions.

For example, in this embodiment of this application, the RSU and the central processing unit are an apparatus for performing collection for a target object, determining recognition information of the target object, and reporting the recognition information of the target object.

When the RSU and the central processing unit perform the method for processing reported information, a target object is collected by using at least one camera and/or sensor in the RSU, and information collected for the target object is sent to the central processing unit. The central processing unit determines recognition information of the target object based on the received collected information of the target object. The recognition information includes a recognition result of the target object, a confidence value of the recognition result, and a confidence type used for determining the confidence value. The central processing unit sends the recognition information of the target object to the RSU. The RSU sends the received recognition information of the target object to a cloud server.

Preferably, the central processing unit stores information used for determining a recognition capability and recognition precision of the RSU. Therefore, the recognition information that is of the target object and that is obtained through processing performed by the central processing unit based on the received collected information that is of the target object and that is sent by the RSU can better indicate a result of the RSU.

In a possible implementation, the mobile collection apparatus is a vehicle.

For example, in this embodiment of this application, the vehicle is an apparatus for performing collection for a target object, determining recognition information of the target object, and reporting the recognition information of the target object.

Preferably, the vehicle is a smart vehicle including at least one camera, a memory, a transceiver, a processor, and a sensor.

When performing the method for processing reported information in embodiments of this application, the vehicle performs collection for a target object by using a camera and/or a sensor in the vehicle. A processor in the vehicle determines recognition information of the target object based on collected information. The recognition information includes a recognition result of the target object, a confidence value of the recognition result, and a confidence type used for determining the confidence value. Then, the vehicle sends the recognition information of the target object to a cloud server by using a transceiver in the vehicle.

In a possible implementation, the mobile collection apparatus is a combination of a central processing unit and a vehicle having a collection function and receiving and sending functions.

For example, in this embodiment of this application, the vehicle and the central processing unit are an apparatus for performing collection for a target object, determining recognition information of the target object, and reporting the recognition information of the target object.

When the RSU and the central processing unit perform the method for processing reported information, a target object is collected by using at least one camera and/or sensor in the vehicle, and information collected for the target object is sent to the central processing unit. The central processing unit determines recognition information of the target object based on the received collected information of the target object. The recognition information includes a recognition result of the target object, a confidence value of the recognition result, and a confidence type used for determining the confidence value. The central processing unit sends the recognition information of the target object to the vehicle. The vehicle sends the received recognition information of the target object to a cloud server.

Preferably, the central processing unit stores information used for determining a recognition capability and recognition precision of the vehicle. Therefore, the recognition information that is of the target object and that is obtained through processing performed by the central processing unit based on the received collected information that is of the target object and that is sent by the vehicle can better indicate a result of the vehicle.

It should be noted that the RSU may be alternatively replaced with another apparatus having functions similar to those of the RSU. This is not limited herein in this application.

In an optional implementation of embodiments of this application, methods described in the first aspect and the second aspect may be performed by an electronic apparatus. The electronic apparatus may be a server (or referred to as a cloud server), an integrated circuit in a server, or a chip in a server. The following uses the cloud server as an example for execution.

In an optional implementation of embodiments of this application, methods described in the third aspect and the fourth aspect may be performed by a collection apparatus. The collection apparatus may be a vehicle. This is not specifically limited in embodiments of this application.

According to a first aspect, an embodiment of this application provides a method for processing reported information, including:

A cloud server receives N pieces of recognition information of a target object from N collection apparatuses. Herein, N is a positive integer. The recognition information includes a recognition result of the target object, a confidence value of the recognition result, and a confidence type used for determining the confidence value. The cloud server divides the N pieces of received recognition information into M groups based on the confidence type in the recognition information. Herein, M is a positive integer not greater than N. The cloud server determines group recognition information corresponding to each of the M groups. The cloud server selects one of the M pieces of group recognition information, and determines a recognition result in the selected recognition information as a final result of the target object. Optionally, when the foregoing method is performed by a system for processing reported information, a cloud server in the system for processing reported information receives the N pieces of recognition information of the target object from the N collection apparatuses by using a transceiver in the cloud server. Then, the processor in the cloud server processes the received N pieces of recognition information. For example, the processor divides the received N pieces of recognition information into the M groups, determines the group recognition information corresponding to each of the M groups, selects one of the M pieces of group recognition information, and determines the recognition result in the selected recognition information as the final result of the target object.

Based on the foregoing method, the cloud server may perform division and comparison on the received recognition information of the target object based on the confidence type in the received recognition information, to obtain a more accurate final result of the target object, thereby effectively improving accuracy of the result.

In a possible implementation, the N pieces of recognition information are received by the cloud server within a first threshold duration.

Optionally, a timer may be set in the cloud server, and a timing duration of the timer is the threshold duration.

For example, after receiving recognition information that is of the target object and that is sent by a first collection apparatus, the cloud server may start the timer, and after running of the timer ends, stop receiving recognition information that is of the target object and that is sent by a collection apparatus.

Based on the foregoing method, the threshold duration is set to limit a time in which the cloud server receives the recognition information that is of the target object and that is sent by the collection apparatus. In this way, the following case is avoided: The cloud server infinitely waits for the recognition information that is of the target object and that is sent by the collection apparatus, and cannot determine the final result of the target object in time.

In a possible implementation, before the cloud server receives the recognition information that is of the target object and that is sent by the N collection apparatuses, the cloud server sends first indication information to a collection apparatus within a threshold range. The first indication information is used to indicate the collection apparatus to recognize the target object and report the recognition information of the target object.

When the foregoing method is performed by the system for processing reported information, the cloud server in the system for processing reported information sends the first indication information to the collection apparatus within the threshold range by using the transceiver in the cloud server.

For example, when the cloud server needs to obtain the recognition information of the target object, to effectively reduce unnecessary signaling overheads and improve validity of the received recognition information of the target object, the threshold range may be preset, and the first indication information is sent to the collection apparatus within the threshold range.

Preferably, the cloud server may obtain location information of the target object; and determine, by using a location of the target object as a center based on the center and the threshold range, a region in which the indication information needs to be sent. Therefore, the cloud server sends the first indication information to the at least one collection apparatus in the region.

Based on the foregoing method, the threshold range is set to effectively reduce unnecessary signaling overheads and improve validity of the received recognition information of the target object.

In a possible implementation, before the cloud server sends the first indication information to the collection apparatus within the threshold range, the cloud server receives the recognition information that is of the target object and that is sent by the collection apparatus whose quantity is less than a threshold quantity.

When the foregoing method is performed by the system for processing reported information, before sending the first indication information to the collection apparatus within the threshold range by using the transceiver, the cloud server in the system for processing reported information receives, by using the transceiver, the recognition information that is of the target object and that is sent by the collection apparatus whose quantity is less than the threshold quantity.

For example, a case in which the cloud server is triggered to send the first indication information to the collection apparatus within the threshold range is that the cloud server receives, by using the transceiver, the recognition information that is of the target object and that is sent by the collection apparatus whose quantity is less than the threshold quantity. Because the quantity of pieces of recognition information of the target object that are received by the cloud server is less than the threshold quantity, to ensure validity of the final result that is of the target object and that is determined by the cloud server, the cloud server needs to obtain a specific quantity of pieces of recognition information of the target object. For this purpose, the cloud server is triggered to send the first indication information to the collection apparatus within the threshold range.

Based on the foregoing method, after determining that the quantity of pieces of received recognition information of the target object is less than the threshold quantity, the cloud server is triggered to send the first indication information to the collection apparatus within the threshold range, so that the cloud server can obtain more pieces of recognition information of the target object, thereby effectively improving accuracy of the final result that is of the target object and that is determined by the cloud server.

In a possible implementation, the first indication information further indicates at least one confidence type for determining the confidence value of the recognition result of the target object.

For example, in this embodiment of this application, it is assumed that the confidence type that is preset by the cloud server and that is used for calculating the confidence value of the recognition result of the target object is, for example, a confidence type 1 and a confidence type 2. In this case, the cloud server may send the first indication information to the collection apparatus to send the specified confidence type to the collection apparatus, so that the collection apparatus determines the confidence value of the recognition result of the target object based on the confidence type 1 or the confidence type 2.

Based on the foregoing method, the cloud server indicates, to the collection apparatus in advance, the confidence type used for determining the confidence value, so that confidence values that are obtained based on recognition results of the target object and that are reported to the cloud server can be more comparable. In addition, the following case can be effectively avoided: The cloud server cannot parse the received confidence value because the cloud server does not have a capability of determining the confidence value for another confidence type.

It should be noted that, if the confidence type that is indicated by the cloud server to the collection apparatus by using the first indication information and that is used for determining the confidence value is a confidence type that cannot be processed by the collection apparatus, the collection apparatus may independently select the confidence type used for determining the confidence value, and report the confidence value selected by the collection apparatus to the cloud server; or if the confidence type that is indicated by the cloud server to the collection apparatus by using the first indication information and that is used for determining the confidence value is a confidence type that cannot be processed by the collection apparatus, the collection apparatus may apply to the cloud server for newly indicating another confidence type used for determining the confidence value. The cloud server may send a notification of the new confidence type only to the collection apparatus, or may newly send a notification of the new confidence type to all collection apparatuses.

In a possible implementation, before the cloud server receives the recognition information that is of the target object and that is sent by the N collection apparatuses, the cloud server sends second indication information to the collection apparatus within the threshold range. The second indication information indicates at least one confidence type for determining the confidence value of the recognition result of the target object.

For example, in this embodiment of this application, it is assumed that the confidence type that is preset by the cloud server and that is used for calculating the confidence value of the recognition result of the target object is, for example, a confidence type 1 and a confidence type 2. In this case, the cloud server may send the second indication information to the collection apparatus to send the specified confidence type to the collection apparatus, so that the collection apparatus determines the confidence value of the recognition result of the target object based on the confidence type 1 or the confidence type 2.

Based on the foregoing method, the cloud server indicates, to the collection apparatus in advance, the confidence type used for determining the confidence value, so that confidence values that are obtained based on recognition results of the target object and that are reported to the cloud server can be more comparable. In addition, the following case can be effectively avoided: The cloud server cannot parse the received confidence value because the cloud server does not have a capability of determining the confidence value for another confidence type.

It should be noted that, if the confidence type that is indicated by the cloud server to the collection apparatus by using the second indication information and that is used for determining the confidence value is a confidence type that cannot be processed by the collection apparatus, the collection apparatus may independently select the confidence type used for determining the confidence value, and report the confidence value selected by the collection apparatus to the cloud server; or if the confidence type that is indicated by the cloud server to the collection apparatus by using the second indication information and that is used for determining the confidence value is a confidence type that cannot be processed by the collection apparatus, the collection apparatus may apply to the cloud server for newly indicating another confidence type used for determining the confidence value. The cloud server may send a notification of the new confidence type only to the collection apparatus, or may newly send a notification of the new confidence type to all collection apparatuses.

In a possible implementation, each of the M pieces of group recognition information includes the same confidence type.

Based on the foregoing method, confidence types in recognition information of the target object in each group obtained after division are the same. In this case, a plurality of confidence values of the target object in the same group may be directly compared, so that most accurate recognition information of the target object in each group can be determined.

In a possible implementation, the cloud server determines recognition information including a maximum confidence value in each group as the group recognition information.

Based on the foregoing method, this embodiment of this application provides a manner of determining group recognition information, that is, the recognition information including the maximum confidence value in each group is determined as the group recognition information.

In a possible implementation, the collection apparatus is a mobile collection apparatus and/or a fixed collection apparatus; and the mobile collection apparatus includes a vehicle, and the fixed collection apparatus includes a roadside unit RSU.

Based on the foregoing method, this embodiment of this application provides a case of the collection apparatus. For example, the collection apparatus is a mobile collection apparatus and/or a fixed collection apparatus; and the mobile collection apparatus includes a vehicle, and the fixed collection apparatus includes a roadside unit RSU.

In a possible implementation, the cloud server updates, based on the final result of the target object, a map region in which the target object is located, and notifies at least one collection apparatus of the updated map region.

When the foregoing method is performed by the system for processing reported information, the cloud server in the system for processing reported information determines, by using the processor, that the final result of the target object is different from content of the target object in the map region, updates the map region in which the target object is located, and notifies the at least one collection apparatus of the updated map region by using the transceiver.

Alternatively, when the foregoing method is performed by the system for processing reported information, the cloud server in the system for processing reported information directly updates, by using the processor based on the final result of the target object, the map region in which the target object is located, and notifies the at least one collection apparatus of the updated map region by using the transceiver.

It should be noted that, in this embodiment of this application, a range of the updated map region may be determined according to an actual case. Determining of the range of the updated map region is not limited in this embodiment of this application.

Based on the foregoing method, the cloud server updates, in time based on the determined final result of the target object, the map region in which the target object is located, and notifies the collection apparatus of the updated map region, so that information in the map can be maintained in time, thereby ensuring validity and real-time performance of the map information.

According to a second aspect, an embodiment of this application provides a method for processing reported information, including:
The cloud server receives N pieces of recognition information of a target object from N collection apparatuses. Herein, N is a positive integer. The recognition information includes a recognition result of the target object and a confidence value of the recognition result. A confidence value in the N pieces of recognition information is determined based on the same confidence type. The cloud server selects recognition information including a maximum confidence value from the N pieces of recognition information. The cloud server determines a recognition result in the selected recognition information as a final result of the target object.

Optionally, when the foregoing method is performed by a system for processing reported information, a cloud server in the system for processing reported information receives the N pieces of recognition information of the target object from the N collection apparatuses by using a transceiver in the cloud server. Then, the processor in the cloud server processes the received N pieces of recognition information. For example, the processor divides the received N pieces of recognition information into the M groups, determines the group recognition information corresponding to each of the M groups, selects one of the M pieces of group recognition information, and determines the recognition result in the selected recognition information as the final result of the target object.

Based on the foregoing method, in this embodiment of this application, the at least one piece of recognition information that is of the target object and that is received by the cloud server is determined based on the same confidence type. The cloud server may directly compare the confidence values in the received recognition information, and determine the recognition result in the recognition information with the largest confidence value as the final result of the target object, thereby effectively improving accuracy of the result.

In a possible implementation, the N pieces of recognition information are received by the cloud server within a threshold duration.

Optionally, a timer may be set in the cloud server, and a timing duration of the timer is the threshold duration.

For example, after receiving recognition information that is of the target object and that is sent by a first collection apparatus, the cloud server may start the timer, and after running of the timer ends, stop receiving recognition information that is of the target object and that is sent by a collection apparatus.

Based on the foregoing method, the threshold duration is set to limit a time in which the cloud server receives the recognition information that is of the target object and that is sent by the collection apparatus. In this way, the following case is avoided: The cloud server infinitely waits for the recognition information that is of the target object and that is sent by the collection apparatus, and cannot determine the final result of the target object in time.

In a possible implementation, before the cloud server receives the recognition information that is of the target object and that is sent by the N collection apparatuses, the cloud server sends first indication information to a collection apparatus within a threshold range. The first indication information is used to indicate the collection apparatus to recognize the target object and report the recognition information of the target object.

When the foregoing method is performed by the system for processing reported information, the cloud server in the system for processing reported information sends the first indication information to the collection apparatus within the threshold range by using the transceiver in the cloud server.

For example, when the cloud server needs to obtain the recognition information of the target object, to effectively reduce unnecessary signaling overheads and improve validity of the received recognition information of the target object, the threshold range may be preset, and the first indication information is sent to the collection apparatus within the threshold range.

Preferably, the cloud server may obtain location information of the target object; and determine, by using a location of the target object as a center based on the center and the threshold range, a region in which the indication information needs to be sent. Therefore, the cloud server sends the first indication information to the at least one collection apparatus in the region.

Based on the foregoing method, the threshold range is set to effectively reduce unnecessary signaling overheads and improve validity of the received recognition information of the target object.

In a possible implementation, before the cloud server sends the first indication information to the collection apparatus within the threshold range, the cloud server receives the recognition information that is of the target object and that is sent by the collection apparatus whose quantity is less than a threshold quantity.

When the foregoing method is performed by the system for processing reported information, before sending the first indication information to the collection apparatus within the threshold range by using the transceiver, the cloud server in the system for processing reported information receives, by using the transceiver, the recognition information that is of the target object and that is sent by the collection apparatus whose quantity is less than the threshold quantity.

For example, a case in which the cloud server is triggered to send the first indication information to the collection apparatus within the threshold range is that the cloud server receives, by using the transceiver, the recognition information that is of the target object and that is sent by the collection apparatus whose quantity is less than the threshold quantity. Because the quantity of pieces of recognition information of the target object that are received by the cloud server is less than the threshold quantity, to ensure validity of the final result that is of the target object and that is determined by the cloud server, the cloud server needs to obtain a specific quantity of pieces of recognition information of the target object. For this purpose, the cloud server is triggered to send the first indication information to the collection apparatus within the threshold range.

Based on the foregoing method, after determining that the quantity of pieces of received recognition information of the target object is less than the threshold quantity, the cloud server is triggered to send the first indication information to the collection apparatus within the threshold range, so that the cloud server can obtain more pieces of recognition information of the target object, thereby effectively improving accuracy of the final result that is of the target object and that is determined by the cloud server.

In a possible implementation, the first indication information further indicates at least one confidence type for determining the confidence value of the recognition result of the target object.

For example, in this embodiment of this application, it is assumed that the confidence type that is preset by the cloud server and that is used for calculating the confidence value of the recognition result of the target object is, for example, a confidence type 1 and a confidence type 2. In this case, the cloud server may send the first indication information to the collection apparatus to send the specified confidence type to the collection apparatus, so that the collection apparatus determines the confidence value of the recognition result of the target object based on the confidence type 1 or the confidence type 2.

Based on the foregoing method, the cloud server indicates, to the collection apparatus in advance, the confidence type used for determining the confidence value, so that confidence values that are obtained based on recognition results of the target object and that are reported to the cloud server can be more comparable. In addition, the following case can be effectively avoided: The cloud server cannot parse the received confidence value because the cloud server does not have a capability of determining the confidence value for another confidence type.

It should be noted that, if the confidence type that is indicated by the cloud server to the collection apparatus by using the first indication information and that is used for determining the confidence value is a confidence type that cannot be processed by the collection apparatus, the collection apparatus may independently select the confidence type used for determining the confidence value, and report the confidence value selected by the collection apparatus to the cloud server; or if the confidence type that is indicated by the cloud server to the collection apparatus by using the first indication information and that is used for determining the confidence value is a confidence type that cannot be processed by the collection apparatus, the collection apparatus may apply to the cloud server for newly indicating another confidence type used for determining the confidence value. The cloud server may send a notification of the new confidence type only to the collection apparatus, or may newly send a notification of the new confidence type to all collection apparatuses.

In a possible implementation, before the cloud server receives the recognition information that is of the target object and that is sent by the N collection apparatuses, the cloud server sends second indication information to the collection apparatus within the threshold range. The second indication information indicates at least one confidence type for determining the confidence value of the recognition result of the target object.

For example, in this embodiment of this application, it is assumed that the confidence type that is preset by the cloud server and that is used for calculating the confidence value of the recognition result of the target object is, for example, a confidence type 1 and a confidence type 2. In this case, the cloud server may send the second indication information to the collection apparatus to send the specified confidence type to the collection apparatus, so that the collection apparatus determines the confidence value of the recognition result of the target object based on the confidence type 1 or the confidence type 2.

Based on the foregoing method, the cloud server indicates, to the collection apparatus in advance, the confidence type used for determining the confidence value, so that confidence values that are obtained based on recognition results of the target object and that are reported to the cloud server can be more comparable. In addition, the following case can be effectively avoided: The cloud server cannot parse the received confidence value because the cloud server does not have a capability of determining the confidence value for another confidence type.

It should be noted that, if the confidence type that is indicated by the cloud server to the collection apparatus by using the second indication information and that is used for determining the confidence value is a confidence type that cannot be processed by the collection apparatus, the collection apparatus may independently select the confidence type used for determining the confidence value, and report the confidence value selected by the collection apparatus to the cloud server; or if the confidence type that is indicated by the cloud server to the collection apparatus by using the second indication information and that is used for determining the confidence value is a confidence type that cannot be processed by the collection apparatus, the collection apparatus may apply to the cloud server for newly indicating another confidence type used for determining the confidence value. The cloud server may send a notification of the new confidence type only to the collection apparatus, or may newly send a notification of the new confidence type to all collection apparatuses.

In a possible implementation, the collection apparatus is a mobile collection apparatus and/or a fixed collection apparatus; and the mobile collection apparatus includes a vehicle, and the fixed collection apparatus includes a roadside unit RSU.

Based on the foregoing method, this embodiment of this application provides a case of the collection apparatus. For example, the collection apparatus is a mobile collection apparatus and/or a fixed collection apparatus; and the mobile collection apparatus includes a vehicle, and the fixed collection apparatus includes a roadside unit RSU.

In a possible implementation, the cloud server updates, based on the final result of the target object, a map region in which the target object is located, and notifies at least one collection apparatus of the updated map region.

When the foregoing method is performed by the system for processing reported information, the cloud server in the system for processing reported information determines, by using the processor, that the final result of the target object is different from content of the target object in the map region, updates the map region in which the target object is located, and notifies the at least one collection apparatus of the updated map region by using the transceiver.

Alternatively, when the foregoing method is performed by the system for processing reported information, the cloud server in the system for processing reported information directly updates, by using the processor based on the final result of the target object, the map region in which the target object is located, and notifies the at least one collection apparatus of the updated map region by using the transceiver.

It should be noted that, in this embodiment of this application, a range of the updated map region may be determined according to an actual case. Determining of the range of the updated map region is not limited in this embodiment of this application.

Based on the foregoing method, the cloud server updates, in time based on the determined final result of the target object, the map region in which the target object is located, and notifies the collection apparatus of the updated map region, so that information in the map can be maintained in time, thereby ensuring validity and real-time performance of the map information.

According to a third aspect, an embodiment of this application provides a method for processing reported information, including:

A collection apparatus determines recognition information of a target object. The recognition information includes a recognition result of the target object, a confidence value of the recognition result, and a confidence type used for determining the confidence value. The collection apparatus sends the recognition information of the target object to a cloud server, so that the cloud server updates a map region in which the target object is located.

Optionally, when the foregoing method is performed by a system for processing reported information, the collection apparatus in the system for processing reported information performs collection for the target object by using a camera and/or a sensor in the collection apparatus, and sends collected information of the target object to a processor of the collection apparatus. The collection apparatus determines the recognition information of the target object by using the processor, and sends the recognition information of the target object to the cloud server.

Based on the foregoing method, in this embodiment of this application, the recognition information that is of the target object and that is reported by the collection apparatus to the cloud server includes the confidence type used for determining the confidence value. In this case, the cloud server may perform division and comparison on the received recognition information of the target object based on the confidence type in the received recognition information, to obtain a more accurate final result of the target object, thereby effectively improving accuracy of the result.

In a possible implementation, before the collection apparatus determines the recognition information of the target object, the collection apparatus receives first indication information from the cloud server. The first indication information is used to indicate the collection apparatus to recognize the target object and report the recognition information of the target object.

When the foregoing method is performed by the system for processing reported information, after receiving the first indication information sent by the cloud server, the collection apparatus in the system for processing reported information is triggered to determine the recognition information of the target object.

Based on the foregoing method, this embodiment of this application provides a method for triggering the collection apparatus to determine the recognition information of the target object.

In a possible implementation, before the collection apparatus determines the recognition information of the target object, the collection apparatus determines that the obtained recognition result of the target object is different from content indicated by the region corresponding to the target object in the map used by the collection apparatus.

When the foregoing method is performed by the system for processing reported information, after determining that the obtained recognition result of the target object is different from the content indicated by the region corresponding to the target object in the map used by the collection apparatus, the collection apparatus in the system for processing reported information triggers determining of the recognition information of the target object.

Based on the foregoing method, this embodiment of this application provides another method for triggering the collection apparatus to determine the recognition information of the target object.

In a possible implementation, the first indication information further indicates at least one confidence type for determining the confidence value of the recognition result of the target object.

For example, in this embodiment of this application, it is assumed that the confidence type that is preset by the cloud server and that is used for calculating the confidence value of the recognition result of the target object is, for example, a confidence type 1 and a confidence type 2. In this case, the cloud server may send the first indication information to the collection apparatus to send the specified confidence type to the collection apparatus, so that the collection apparatus determines the confidence value of the recognition result of the target object based on the confidence type 1 or the confidence type 2.

Based on the foregoing method, the cloud server indicates, to the collection apparatus in advance, the confidence type used for determining the confidence value, so that confidence values that are obtained based on recognition results of the target object and that are reported to the cloud server can be more comparable. In addition, the following case can be effectively avoided: The cloud server cannot parse the received confidence value because the cloud server does not have a capability of determining the confidence value for another confidence type.

It should be noted that, if the confidence type that is indicated by the cloud server to the collection apparatus by using the first indication information and that is used for determining the confidence value is a confidence type that cannot be processed by the collection apparatus, the collection apparatus may independently select the confidence type used for determining the confidence value, and report the confidence value selected by the collection apparatus to the cloud server; or if the confidence type that is indicated by the cloud server to the collection apparatus by using the first indication information and that is used for determining the confidence value is a confidence type that cannot be processed by the collection apparatus, the collection apparatus may apply to the cloud server for newly indicating another confidence type used for determining the confidence value. The cloud server may send a notification of the new confidence type only to the collection apparatus, or may newly send a notification of the new confidence type to all collection apparatuses.

In a possible implementation, before the collection apparatus determines the recognition information of the target object, the collection apparatus receives second indication information from the cloud server. The second indication information indicates at least one confidence type for determining the confidence value of the recognition result of the target object.

For example, in this embodiment of this application, it is assumed that the confidence type that is preset by the cloud server and that is used for calculating the confidence value of the recognition result of the target object is, for example, a confidence type 1 and a confidence type 2. In this case, the cloud server may send the second indication information to the collection apparatus to send the specified confidence type to the collection apparatus, so that the collection apparatus determines the confidence value of the recognition result of the target object based on the confidence type 1 or the confidence type 2.

Based on the foregoing method, the cloud server indicates, to the collection apparatus in advance, the confidence type used for determining the confidence value, so that confidence values that are obtained based on recognition results of the target object and that are reported to the cloud server can be more comparable. In addition, the following case can be effectively avoided: The cloud server cannot parse the received confidence value because the cloud server does not have a capability of determining the confidence value for another confidence type.

It should be noted that, if the confidence type that is indicated by the cloud server to the collection apparatus by using the second indication information and that is used for determining the confidence value is a confidence type that cannot be processed by the collection apparatus, the collection apparatus may independently select the confidence type used for determining the confidence value, and report the confidence value selected by the collection apparatus to the cloud server; or if the confidence type that is indicated by the cloud server to the collection apparatus by using the second indication information and that is used for determining the confidence value is a confidence type that cannot be processed by the collection apparatus, the collection apparatus may apply to the cloud server for newly indicating another confidence type used for determining the confidence value. The cloud server may send a notification of the new confidence type only to the collection apparatus, or may newly send a notification of the new confidence type to all collection apparatuses.

In a possible implementation, the collection apparatus is a mobile collection apparatus and/or a fixed collection apparatus; and the mobile collection apparatus includes a vehicle, and the fixed collection apparatus includes a roadside unit RSU.

Based on the foregoing method, this embodiment of this application provides a case of the collection apparatus. For example, the collection apparatus is a mobile collection apparatus and/or a fixed collection apparatus; and the mobile collection apparatus includes a vehicle, and the fixed collection apparatus includes a roadside unit RSU.

According to a fourth aspect, an embodiment of this application provides a method for processing reported information, including:
A collection apparatus determines recognition information of a target object, where the recognition information includes a recognition result of the target object and a confidence value of the recognition result, and the confidence value of the recognition result is determined based on a preset confidence type; and sends the recognition information of the target object to a cloud server, so that the cloud server updates a map region in which the target object is located.

Optionally, when the foregoing method is performed by a system for processing reported information, the collection apparatus in the system for processing reported information performs collection for the target object by using a camera and/or a sensor in the collection apparatus, and sends collected information of the target object to a processor of the collection apparatus. The collection apparatus determines the recognition information of the target object by using the processor, and sends the recognition information of the target object to the cloud server.

Based on the foregoing method, in this embodiment of this application, in the recognition information that is of the target object and that is reported by the collection apparatus to the cloud server, the included confidence value of the recognition result is determined based on the preset confidence type. In this case, the cloud server may directly perform comparison on the received recognition information, to obtain a more accurate final result of the target object, thereby effectively improving accuracy of the result.

In a possible implementation, before the collection apparatus determines the recognition information of the target object, the collection apparatus receives first indication information from the cloud server. The first indication information is used to indicate the collection apparatus to recognize the target object and report the recognition information of the target object.

When the foregoing method is performed by the system for processing reported information, after receiving the first indication information sent by the cloud server, the collection apparatus in the system for processing reported information is triggered to determine the recognition information of the target object.

Based on the foregoing method, this embodiment of this application provides a method for triggering the collection apparatus to determine the recognition information of the target object.

In a possible implementation, before the collection apparatus determines the recognition information of the target object, the collection apparatus determines that the obtained recognition result of the target object is different from content indicated by the region corresponding to the target object in the map used by the collection apparatus.

When the foregoing method is performed by the system for processing reported information, after determining that the obtained recognition result of the target object is different from the content indicated by the region corresponding to the target object in the map used by the collection apparatus, the collection apparatus in the system for processing reported information triggers determining of the recognition information of the target object.

Based on the foregoing method, this embodiment of this application provides another method for triggering the collection apparatus to determine the recognition information of the target object.

In a possible implementation, the first indication information further indicates that the preset confidence type is a first confidence type.

For example, in this embodiment of this application, it is assumed that the confidence type that is preset by the cloud server and that is used for calculating the confidence value of the recognition result of the target object is the first confidence type, for example, the confidence type is a confidence type 1. In this case, the cloud server may send the first indication information to the collection apparatus to send the specified confidence type to the collection apparatus, so that the collection apparatus determines the confidence value of the recognition result of the target object based on the confidence type 1.

Based on the foregoing method, the cloud server indicates, to the collection apparatus in advance, the confidence type used for determining the confidence value, so that confidence values that are obtained based on recognition results of the target object and that are reported to the cloud server can be more comparable.

It should be noted that, if the confidence type that is indicated by the cloud server to the collection apparatus by using the first indication information and that is used for determining the confidence value is a confidence type that cannot be processed by the collection apparatus, the collection apparatus may independently select the confidence type used for determining the confidence value, and report the confidence value selected by the collection apparatus to the cloud server; or if the confidence type that is indicated by the cloud server to the collection apparatus by using the first indication information and that is used for determining the confidence value is a confidence type that cannot be processed by the collection apparatus, the collection apparatus may apply to the cloud server for newly indicating another confidence type used for determining the confidence value. The cloud server may send a notification of the new confidence type only to the collection apparatus, or may newly send a notification of the new confidence type to all collection apparatuses.

In a possible implementation, the collection apparatus receives second indication information from the cloud server. The second indication information is used to indicate that the preset confidence type is the first confidence type.

For example, in this embodiment of this application, it is assumed that the confidence type that is preset by the cloud server and that is used for calculating the confidence value of the recognition result of the target object is the first confidence type, for example, a confidence type 1. In this case, the cloud server may send the second indication information to the collection apparatus to send the specified confidence type to the collection apparatus, so that the collection apparatus determines the confidence value of the recognition result of the target object based on the confidence type 1.

Based on the foregoing method, the cloud server indicates, to the collection apparatus in advance, the confidence type used for determining the confidence value, so that confidence values that are obtained based on recognition results of the target object and that are reported to the cloud server can be more comparable.

It should be noted that, if the confidence type that is indicated by the cloud server to the collection apparatus by using the second indication information and that is used for determining the confidence value is a confidence type that cannot be processed by the collection apparatus, the collection apparatus may independently select the confidence type used for determining the confidence value, and report the confidence value selected by the collection apparatus to the cloud server; or if the confidence type that is indicated by the cloud server to the collection apparatus by using the second indication information and that is used for determining the confidence value is a confidence type that cannot be processed by the collection apparatus, the collection apparatus may apply to the cloud server for newly indicating another confidence type used for determining the confidence value. The cloud server may send a notification of the new confidence type only to the collection apparatus, or may newly send a notification of the new confidence type to all collection apparatuses.

In a possible implementation, the collection apparatus is a mobile collection apparatus and/or a fixed collection apparatus; and the mobile collection apparatus includes a vehicle, and the fixed collection apparatus includes a roadside unit RSU.

Based on the foregoing method, this embodiment of this application provides a case of the collection apparatus. For example, the collection apparatus is a mobile collection apparatus and/or a fixed collection apparatus; and the mobile collection apparatus includes a vehicle, and the fixed collection apparatus includes a roadside unit RSU.

According to a fifth aspect, an embodiment of this application further provides an apparatus for processing reported information. The apparatus may be configured to perform operations in any possible implementation of the first aspect and the fourth aspect. For example, the apparatus may include modules or units configured to perform the operations in the first aspect or any possible implementation of the first aspect. For example, the apparatus includes a transceiver module and a processing module.

According to a sixth aspect, an embodiment of this application provides a chip system. The chip system includes a processor and optionally further includes a memory. The memory is configured to store a computer program. The processor is configured to: invoke the computer program from the memory, and run the computer program, so that the apparatus for processing reported information on which the chip system is installed performs any method in any possible implementation of the first aspect or the fourth aspect.

According to a seventh aspect, an embodiment of this application provides a vehicle, at least one camera, at least one memory, at least one transceiver, and at least one processor.

The camera is configured to: perform collection for a target object, and obtain at least one image of the target object.

The memory is configured to store one or more programs and data information. The one or more programs include instructions.

The processor is configured to determine recognition information of the target object based on the at least one image. The recognition information includes a recognition result of the target object, a confidence value of the recognition result, and a type used for determining the confidence value.

The transceiver is configured to send the recognition information of the target object to a cloud server.

In a possible implementation, the vehicle further includes a display screen, a voice broadcasting apparatus, and at least one sensor.

The display screen is configured to display the image of the target object.

The voice broadcasting apparatus is configured to broadcast the recognition result of the target object.

The sensor is configured to perform detection and recognition on a location, a distance, and other representation information of the target object.

The camera described in this embodiment of this application may be a camera of a driver monitoring system, a cockpit camera, an infrared camera, an event data recorder (that is, a video recording terminal), a vehicle backup camera, or the like. This is not specifically limited in this embodiment of this application.

A photographing region of the camera may be an external environment of the vehicle. For example, when the vehicle moves forward, the photographing region is a region in front of the vehicle; or when the vehicle reverses, the photographing region is a region behind the vehicle. When the camera is a 360-degree multi-angle camera, the photographing region may be a 360-degree region around the vehicle.

The sensor in this embodiment of this application may be one or more of a photoelectric/photosensitive sensor, an ultrasonic/sound-sensitive sensor, a ranging/distance sensor, a vision/image sensor, or the like.

According to an eighth aspect, an embodiment of this application provides a first system for processing reported information. The system includes a cloud server and a collection apparatus.

The collection apparatus is configured to: determine recognition information of a target object, where the recognition information includes a recognition result of the target object, a confidence value of the recognition result, and a confidence type used for determining the confidence value; and send the recognition information of the target object to a cloud server, so that the cloud server updates a map region in which the target object is located.

The cloud server is configured to: receive N pieces of recognition information of the target object from N collection apparatuses, where N is a positive integer, and the recognition information includes a recognition result of the target object, a confidence value of the recognition result, and a confidence type used for determining the confidence value; divide the N pieces of received recognition information into M groups based on the confidence type in the recognition information, where M is a positive integer not greater than N; determine group recognition information corresponding to each of the M groups; and select one of the M pieces of group recognition information, and determine a recognition result in the selected recognition information as a final result of the target object.

According to a ninth aspect, an embodiment of this application provides a second system for processing reported information. The system includes a cloud server and a collection apparatus.

The collection apparatus is configured to: determine recognition information of a target object, where the recognition information includes a recognition result of the target object and a confidence value of the recognition result, and the confidence value of the recognition result is determined based on a preset confidence type; and send the recognition information of the target object to a cloud server, so that the cloud server updates a map region in which the target object is located.

The cloud server is configured to: receive N pieces of recognition information of a target object from N collection apparatuses, where N is a positive integer, and the recognition information includes a recognition result of the target object and a confidence value of the recognition result, and a confidence value in the N pieces of recognition information is determined based on a preset confidence type; select recognition information including a maximum confidence value from the N pieces of recognition information; and determine a recognition result in the selected recognition information as a final result of the target object.

According to a tenth aspect, an embodiment of this application provides a computer program product. The computer program product includes computer program code. When the computer program code is run by a communications module and a processing module, or a transceiver and a processor of an apparatus for processing reported information, the apparatus for processing reported information is enabled to perform any method in any possible implementation of the first aspect or the fourth aspect.

According to an eleventh aspect, an embodiment of this application provides a computer readable storage medium. The computer readable storage medium stores a program. The program enables an apparatus for processing reported information to perform any method in any possible implementation of the first aspect or the fourth aspect.

### BRIEF DESCRIPTION OF DRAWINGS

FIG. 1 is a schematic diagram of a scenario in which an existing collection apparatus recognizes a target object;
FIG. 2 is a schematic diagram of an existing scenario of processing reported information;
FIG. 3 is a schematic diagram of a system for processing reported information according to an embodiment of this application;
FIG. 4 is a schematic diagram of a self-driving scenario according to an embodiment of this application;
FIG. 5 is a schematic diagram of a first application scenario according to an embodiment of this application;
FIG. 6 is a schematic diagram of a vehicle according to this application;
FIG. 7 is a schematic diagram of a second application scenario according to an embodiment of this application;
FIG. 8A and FIG. 8B are a schematic diagram of a first method for processing reported information according to an embodiment of this application;
FIG. 9(a) and FIG. 9(b) are a schematic diagram of a third application scenario according to an embodiment of this application;
FIG. 10A and FIG. 10B are a schematic diagram of a second method for processing reported information according to an embodiment of this application;
FIG. 11 is a schematic diagram of a fourth application scenario according to an embodiment of this application;
FIG. 12A, FIG. 12B, and FIG. 12C are a schematic diagram of a third method for processing reported information according to an embodiment of this application;
FIG. 13A and FIG. 13B are a schematic diagram of a fourth method for processing reported information according to an embodiment of this application;
FIG. 14 is a schematic diagram of a first apparatus for processing reported information according to this application; and
FIG. 15 is a schematic diagram of a second apparatus for processing reported information according to this application.

### DESCRIPTION OF EMBODIMENTS

High-definition maps are often applied in a travel process, to help travelers and self-driving vehicles make more accurate decisions. Therefore, an increasingly high requirement is imposed on accuracy of the high-definition maps. In an application process, to ensure the accuracy of the high-definition maps, the high-definition maps need to be updated in time based on an actual road condition.

A data information collection mode of the high-definition map may be classified into centralized collection and crowdsourcing collection. In a collection process, to better ensure data precision and reduce the collection costs, a solution of a combination of the two modes is often used. For example, a static part of the high-definition map is first drawn in the centralized collection mode, and then the drawn high-definition map is updated and improved in the crowdsourcing collection mode.

However, in the crowdsourcing collection mode, target recognition information reported by a plurality of vehicles needs to be collected, and different vehicles have different recognition capabilities and different recognition precision. Therefore, recognition results reported by different vehicles for the same target object are often different; and consequently, a conflict occurs.

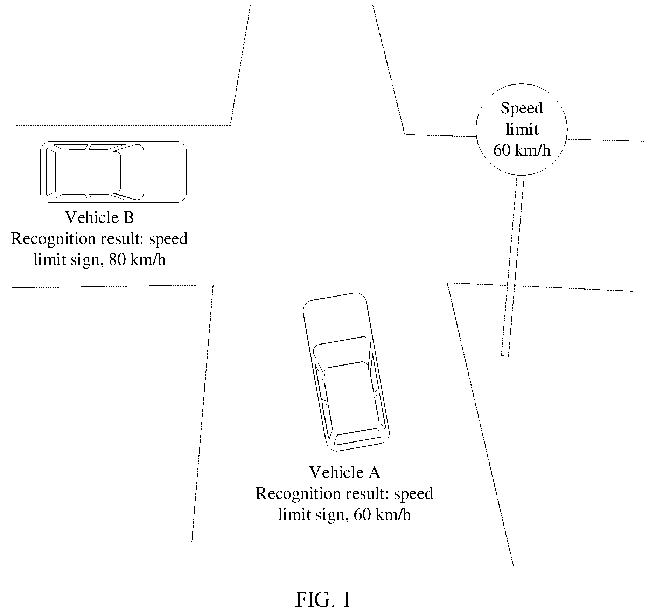

For example, it is assumed that as shown in FIG. 1, the target object is a 60 kilometers/hour (km/h) speed limit sign beside a road. One vehicle (for example, a vehicle A) recognizes the target object as a 60 km/h speed limit sign, while another vehicle (for example, a vehicle B) may mistakenly recognize the target object as an 80 km/h speed limit sign due to a recognition precision problem. After receiving different recognition results of the same target object, a cloud server needs to determine which result is to be trusted, and update the result to the map. If the result is not properly selected, an erroneous update to the map may be caused, thereby causing a potential risk to transportation safety.

To resolve a recognition conflict problem in crowdsourcing mapping, a confidence-based processing method is proposed in the industry.

For example, when recognizing the target object, the vehicle obtains a recognition result of the target object, and further calculates a confidence value of the recognition result. Recognition information that is of the target object and that is reported by the vehicle to the cloud server includes not only the recognition result of the target object, but also the confidence value of the recognition result.

When the cloud server receives the recognition information respectively reported by different vehicles for the same target object, with reference to confidence values in the recognition information reported by the vehicles, the cloud server may further determine to select a recognition result in specific recognition information as a final result for displaying the target object on the map.

For example, a processing method is selecting a recognition result corresponding to recognition information with a highest confidence value from the plurality of pieces of received recognition information.

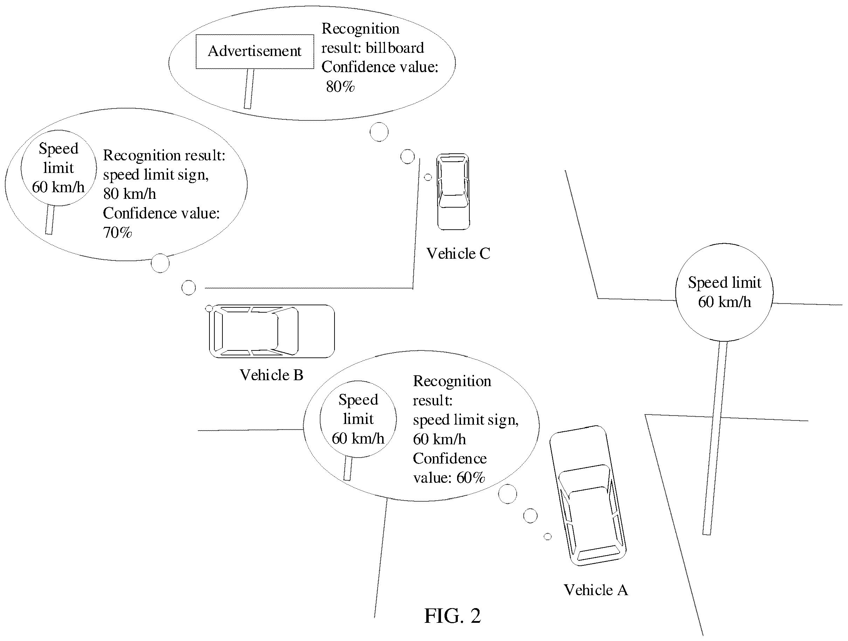

As shown in FIG. 2, it is assumed that for the same target object, content of recognition information reported by a vehicle A for the target object includes: a recognition result of the target object is a speed limit sign, a speed limit indication is 60 km/h, and a confidence value of the recognition result is 60%; content of recognition information reported by a vehicle B for the target object includes: a recognition result of the target object is a speed limit sign, a speed limit indication is 80 km/h, and a confidence value of the recognition result is 70%; and content of recognition information reported by a vehicle C for the target object includes: a recognition result of the target object is a billboard, and a confidence value of the recognition result is 80%.

Therefore, the cloud server may trust a recognition result with a highest confidence value, that is, select the recognition result reported by the vehicle C for the target object; and determine the target object as the billboard, and update the map.

However, the foregoing method for processing reported information has an obvious defect. To be specific, because the vehicles are different, the vehicles may use different calculation methods to determine confidence values of recognition results of the target object, and meanings of confidence values obtained by using different calculation methods may be greatly different. Therefore, confidence values reported by different vehicles usually cannot be directly compared.

For example, it is assumed that for the same target object, the vehicle A performs calculation on the obtained recognition result of the target object by using a method A, and determines that the confidence value of the recognition result is 60%; and the vehicle B performs calculation on the obtained recognition result of the target object by using a method B, and determines that the confidence value of the recognition result is 70%.

The recognition result that is of the target object and that is reported by the vehicle B may be more reliable through simply comparing values of the confidence values reported by the two vehicles.

However, if the vehicle B uses the same confidence value determining method as the vehicle A to perform calculation on the recognition result, the confidence value that is of the recognition result and that is obtained through calculation may be 50%. In this case, with reference to the confidence value of the recognition result obtained by the vehicle A, it can be learned that the recognition result reported by the vehicle A is more reliable. However, if the recognition result obtained by the vehicle B is determined as a final result of the target object, erroneous determining exists. If the map is updated based on the recognition result obtained after the erroneous determining, a safety risk is easily caused because updated content is erroneous content.

In other words, in an existing method for processing reported information, reporting vehicles usually have different confidence value calculation methods for the same target object. As a result, a value relationship between confidence values of the reporting vehicles cannot truly reflect reliability degrees, and a risk of erroneous determining may be caused.

In conclusion, currently, there is no accurate and effective processing method for a plurality of reported results of recognition information for the same target object in the crowdsourcing collection mode.

To resolve this problem, embodiments of this application provide a method and an apparatus for processing reported information, to efficiently and accurately process reported information, thereby reducing a case of erroneous determining caused due to improper processing of the reported information.

Technical solutions in embodiments of this application may be applied to various communications systems, for example, a long term evolution (long term evolution, LTE) system, a worldwide interoperability for microwave access (worldwide interoperability for microwave access, WiMAX) communications system, a future 5th generation (5th Generation, 5G) system such as a new radio access technology (new radio access technology, NR), and a future communications system such as a 6G system.

A 5G system (which may be also referred to as a New Radio system) is used as an example. Specifically, in embodiments of this application, methods for calculating confidence values of recognition results reported by different vehicles for the same target in reported information is mainly obtained in a process of processing reported information, so that the confidence values obtained by using the same confidence calculation method are compared.

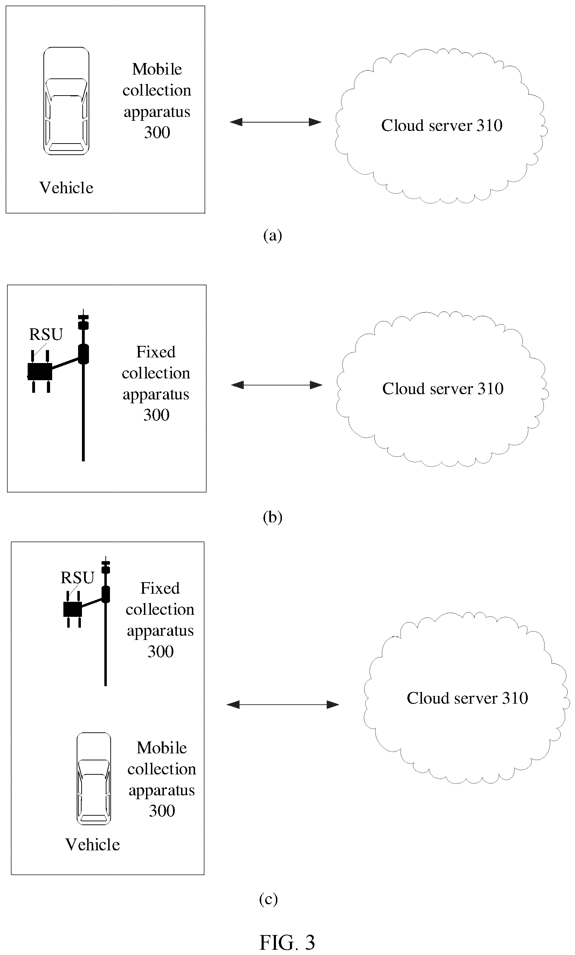

For ease of understanding embodiments of this application, an embodiment of this application provides a system for processing reported information. As shown in FIG. 3, the system for processing reported information includes a collection apparatus 300 and a cloud server 310.

The collection apparatus 300 is configured to: perform collection for a target object, and determine recognition information of the target object.

The recognition information includes a recognition result of the target object, and a confidence value that is of the recognition result and that is determined based on a preset confidence type. Alternatively, the recognition information includes a recognition result of the target object, a confidence value of the recognition result, and a confidence type used for determining the confidence value.

In this embodiment of this application, as shown in (a) in FIG. 3, the collection apparatus 300 may be a mobile collection apparatus, for example, a vehicle.

In an optional manner, the vehicle in this embodiment of this application has an image collection function, an information processing function, and a communication function.

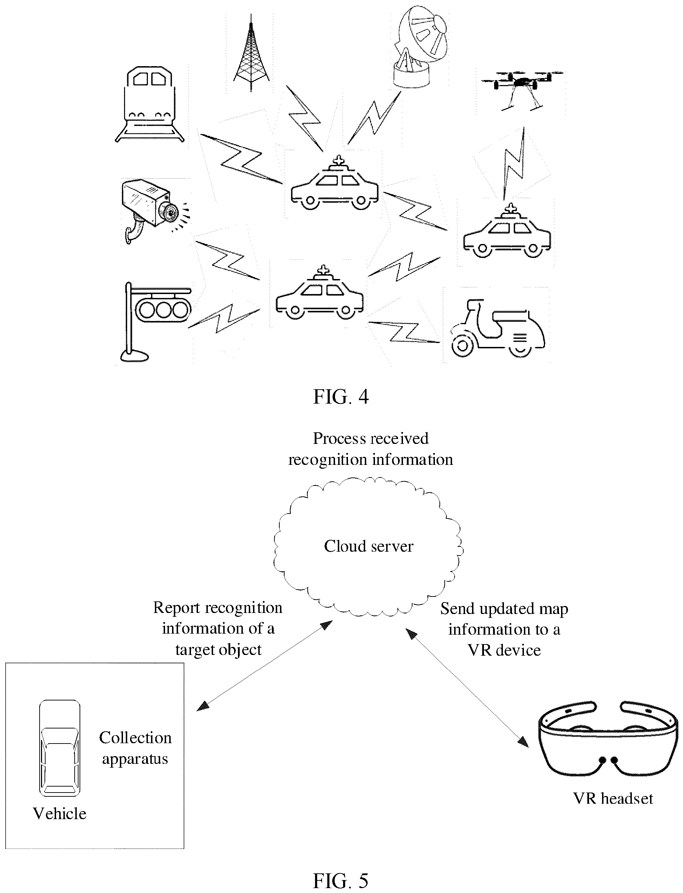

For example, FIG. 4 is a schematic diagram of a possible application scenario according to an embodiment of this application. The foregoing application scenario may be unmanned driving, self-driving, intelligent driving, connected driving, or the like. A target detection and tracking system may be installed in a motor vehicle (for example, an unmanned vehicle, an intelligent vehicle, an electric vehicle, or a digital vehicle), an unmanned aerial vehicle, a railcar, a bicycle, a signal light, a speed measurement apparatus, a network device (for example, a base station or a terminal device in various systems), or the like.

In addition, as shown in (b) in FIG. 3, the collection apparatus 300 in this embodiment of this application may be alternatively a fixed collection apparatus.

An optional fixed collection apparatus in this embodiment of this application may be an apparatus that has a photographing function, at least one sensor, and a communication function.

For example, the fixed collection apparatus in this embodiment of this application is an RSU disposed on a road.

For example, the fixed collection apparatus in this embodiment of this application is a system including a camera, at least one sensor, and a communications apparatus. In other words, the three apparatuses exist independently, and the three apparatuses are referred to as a fixed collection apparatus as a whole. Alternatively, the fixed collection apparatus in this embodiment of this application may be an apparatus integrating a camera, at least one sensor, and a communications apparatus.

In addition, as shown in (c) in FIG. 3, the collection apparatus 300 in this embodiment of this application may be alternatively a combination of a mobile collection apparatus and a fixed collection apparatus.

In this embodiment of this application, for brevity of description, a vehicle is selected as a collection apparatus for description. For brevity of description, when the collection apparatus includes only a fixed collection apparatus, or when the collection apparatus includes a fixed collection apparatus and a mobile collection apparatus, for content of performing the method for processing reported information, reference may be specifically made to content of reporting information when the collection apparatus is the vehicle.

The cloud server 310 may also be referred to as a receive end, and has a capability of analyzing and processing information and communicating with another apparatus.

In an optional manner of this embodiment of this application, the cloud server is a central processing unit, or the cloud server is a processing chip in a server.

The cloud server 310 is responsible for receiving the recognition information that is of the target object and that is sent by the collection apparatus 300, determining, based on the recognition information of the target object, whether corresponding map content needs to be updated, and notifying a corresponding collection apparatus of the updated map content after an update of the map content is completed.

The system architecture and the service scenario described in this embodiment of this application are intended to describe the technical solutions in embodiments of this application more clearly, and do not constitute a limitation on the technical solutions provided in embodiments of this application.

For example, in subsequent development, the collection apparatus may be a set of a mobile collection apparatus and a fixed collection apparatus.

For another example, in a subsequent development process, intervention of a third-party application device may further exist.

For example, as shown in FIG. 5, it is assumed that the collection apparatus is a vehicle, and the third-party application device is a virtual reality VR display device in a map scenario. After determining that map content needs to be updated and completing the map update, the cloud server may further send updated map information to the third-party application device. Therefore, when a user has virtual experience by using the third-party device, information obtained by the user is more accurate and authentic.

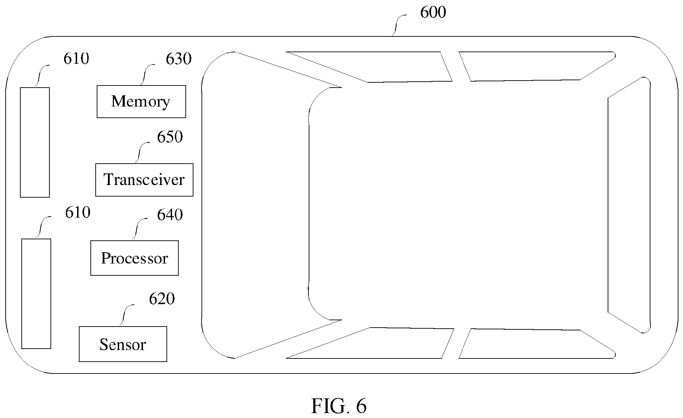

As shown in FIG. 6, an embodiment of this application provides an internal structure of a vehicle. The internal structure is not specifically limited to the following content.

The vehicle 600 includes a camera 610, a sensor 620, a memory 630, a processor 640, and a transceiver 650.

The camera 610 is configured to obtain an image of a target object.

The camera in this embodiment of this application may be a camera of a driver monitoring system, a cockpit camera, an infrared camera, an event data recorder (that is, a video recording terminal), a vehicle backup camera, or the like. This is not specifically limited in this embodiment of this application. A photographing region of the camera may be an external environment of the vehicle.

The sensor 620 is configured to obtain representation information of the target object, to assist the processor in determining a recognition result of the target object.

The representation information of the target object is mainly used to indicate an external feature, location information, and the like of the target object. For example, the representation information of the target object includes a size, a color, a shape, a placement location, and the like of the target object.

For example, the sensor in this embodiment of this application may include one or more of a photoelectric/photosensitive sensor, an ultrasonic/sound-sensitive sensor, a ranging/distance sensor, a vision/image sensor, a gyroscope sensor, or the like.

It should be noted that, in this embodiment of this application, the camera and the sensor may be used in combination to collect information about the target object. A specific combination manner and/or a collection manner are/is not limited in this application. Any collection manner that can be applied to the target object in this embodiment of this application is applicable to this embodiment of this application.

The memory 630 is configured to store one or more programs and data information. The one or more programs include instructions.

The data information in this embodiment of this application may include algorithm information used for determining a confidence value of the recognition result, and the like.

The processor 640 is configured to: obtain the collected information of the target object, and determine recognition information of the target object based on the collected information of the target object. The recognition information includes a recognition result of the target object, and a confidence value that is of the recognition result and that is determined by the processor 640 based on a preset confidence type. Alternatively, the recognition information includes a recognition result of the target object, a confidence value that is of the recognition result and that is determined by the processor 640, and a confidence type used for determining the confidence value.

For example, in this embodiment of this application, the processor 640 obtains the collected information of the target object from the camera 610 and/or the sensor 620 by using the transceiver 650. Alternatively, in this embodiment of this application, the processor 640 obtains the collected information of the target object by using a communications interface connected to the camera 610 and/or the sensor 620.

The transceiver 650 is configured to perform information transmission with a cloud server, and is configured to perform information transmission with a communications apparatus such as another vehicle.

In an optional manner of this embodiment of this application, the transceiver is configured to report, to the cloud server, the recognition information that is of the target object and that is determined by the vehicle.

The system architecture and the service scenario described in this embodiment of this application are intended to describe the technical solutions in embodiments of this application more clearly, and do not constitute a limitation on the technical solutions provided in embodiments of this application. Further, a person of ordinary skill in the art may know that with evolution of a network architecture and emergence of a new service scenario, the technical solutions provided in embodiments of this application are also applicable to similar technical problems. It should be understood that FIG. 3 to FIG. 6 are merely simplified schematic diagrams for ease of understanding. The system architecture may further include another device or may further include another unit or module.

Some terms in embodiments of this application are explained and described below for ease of understanding.
(1) Confidence value (confidence): In an optional case in this embodiment of this application, the confidence value is used to measure a reliability degree of a recognition result.

Currently, there are a plurality of confidence value calculation methods in the industry. At least the following types are included:
a posteriori probability directly obtained based on a Bayesian classification method, an estimation of a posteriori probability obtained based on a neural network or another method, a randomness measurement value obtained based on an algorithm randomness theory, a membership degree value obtained based on fuzzy mathematics, accuracy obtained through a plurality of tests and experiments, and the like.

It should be noted that the confidence calculation method in this embodiment of this application is not limited to the foregoing several types, and any calculation method that can be used to determine a confidence value may be applied to this embodiment of this application and falls within the protection scope of this embodiment of this application.

(2) Homogeneous fusion: In an optional manner in this embodiment of this application, the homogeneous fusion indicates comparison and fusion of confidence values that are of recognition results of the target object and that are obtained based on the same confidence type.

For example, in this embodiment of this application, when the homogeneous fusion is performed, a homogeneous fusion result may be obtained through directly referring to a magnitude of a confidence value.

For example, for the recognition result of the vehicle A for the target object, a confidence value obtained through calculation based on a confidence type 1 is 60%; for the recognition result of the vehicle B for the target object, a confidence value obtained through calculation based on the confidence type 1 is 70%; and for the recognition result of the vehicle C for the target object, a confidence value obtained through calculation based on the confidence type 1 is 75%.

The confidence values are all calculated based on the confidence type 1 for the recognition results of the vehicles A, B, and C for the target object. Therefore, when the confidence values of the vehicles A, B, and C are compared, the homogeneous fusion may be performed.

In other words, after receiving the recognition information that is of the target object and that is reported by the vehicles A, B, and C, the cloud server may directly compare magnitudes of the confidence values of the vehicles A, B, and C. From the received recognition information of the target object, a recognition result corresponding to recognition information with a maximum confidence value is selected as a determined final result of the target object in the vehicles A, B, and C. To be specific, when determining the final result of the target object based on the recognition information that is of the target object and that is reported by the vehicles A, B, and C, the cloud server determines, as the final result of the target object, the recognition result in the recognition information reported by the vehicle C.

(3) Heterogeneous fusion: In an optional manner in this embodiment of this application, the homogeneous fusion indicates comparison and fusion of confidence values that are of recognition results of the target object and that are obtained based on different confidence types.

In an application scenario in this embodiment of this application, it is assumed that for the recognition result of the vehicle A for the target object, a confidence value obtained through calculation based on a confidence type 1 is 60%; for the recognition result of the vehicle B for the target object, a confidence value obtained through calculation based on a confidence type 2 is 70%; and for the recognition result of the vehicle C for the target object, a confidence value obtained through calculation based on a confidence type 3 is 75%.

In this scenario, the confidence values that are reported by the three vehicles and that are received by the cloud server are obtained through calculation based on different confidence types. Therefore, the cloud server directly performs the heterogeneous fusion on the confidence values reported by the three vehicles.

In another application scenario in this embodiment of this application, it is assumed that for the recognition result of the vehicle A for the target object, a confidence value obtained through calculation based on a confidence type 1 is 60%; for the recognition result of the vehicle B for the target object, a confidence value obtained through calculation based on the confidence type 1 is 70%; for the recognition result of the vehicle C for the target object, a confidence value obtained through calculation based on a confidence type 2 is 75%; and for a recognition result of a vehicle D for the target object, a confidence value obtained through calculation based on the confidence type 2 is 65%.

In this scenario, in the confidence values that are reported by the four vehicles and that are received by the cloud server, the confidence values reported by the vehicle A and the vehicle B are obtained through calculation based on the same confidence type, and the confidence values reported by the vehicle C and the vehicle D are obtained through calculation based on the same confidence type.

Therefore, the cloud server needs to first perform the homogeneous fusion, that is, first determine a fusion result of the vehicle A and the vehicle B and determine a fusion result of the vehicle C and the vehicle D in a homogeneous fusion manner. It may be understood that the received recognition information that is of the target object and that is reported by different vehicles is divided into groups. Based on the confidence type, the recognition information that is of the target object and that is reported by the vehicle A and the vehicle B is put into one group, and the recognition information that is of the target object and that is reported by the vehicle C and the vehicle D is put into one group.

It can be learned from the foregoing description of the homogeneous fusion that, if the confidence value of the vehicle B is greater in the vehicle A and the vehicle B, the cloud server selects, as a result of the homogeneous fusion group, the recognition information reported by the vehicle B, that is, uses, as group recognition information of the group, the recognition information reported by the vehicle B; and if the confidence value of the vehicle C is greater in the vehicle C and the vehicle D, the cloud server selects, as a result of the homogeneous fusion group, the recognition information reported by the vehicle C, that is, uses, as group recognition information of the group, the recognition information reported by the vehicle C.

Then, the cloud server continues to perform the heterogeneous fusion on the vehicle B and the vehicle C. It may be understood that the cloud server continues to perform the heterogeneous fusion on two homogeneous fusion results (that is, the group recognition information corresponding to the two groups) obtained through the homogeneous fusion.

In addition, in an actual case, when performing the heterogeneous fusion, the cloud server may perform fusion with reference to other information.

The other information in this embodiment of this application may include historical statistics information, another vehicle-related parameter, and the like. This is not specifically limited.

In an optional manner of this embodiment of this application, the cloud server performs analysis with reference to reporting accuracy of a historical vehicle, and the cloud server may perform weighted summation on the confidence value reported by the vehicle and the historical reporting accuracy to obtain an evaluation value. Therefore, during heterogeneous fusion, the cloud server determines the finally used recognition result reported by the vehicle based on an evaluation value corresponding to each vehicle.

For example, it is assumed that the confidence value of the recognition result reported by the vehicle A for the target object is 80%. The cloud server queries the historical reporting accuracy of the vehicle A, obtains the historical reporting accuracy of the vehicle A: 90%, and then uses a specified weighted summation algorithm to obtain the evaluation value of the vehicle A: 85%.

(4) Confidence type: The confidence type in this embodiment of this application may be understood as a calculation method for calculating a confidence value.

In this embodiment of this application, there may be a plurality of representation manners of the confidence type included in the recognition information of the target object. The representation manners are not specifically limited to the following several manners.

In a representation manner 1, the recognition information of the target object includes an identifier corresponding to the confidence type, to represent the confidence type used for calculating the confidence value.

There are a plurality of types of identifiers corresponding to the confidence types. The identifiers are not specifically limited to the following types:
a. A name corresponding to the confidence type is used as the identifier of the confidence type.

For example, the vehicle directly uses, as a confidence type, a name of a method for calculating a confidence value of a target recognition result.

For example, it is assumed that the vehicle A uses the Bayesian classification method to calculate the confidence value of the recognition result of the target object. In this case, the recognition information reported by the vehicle A includes the Bayesian classification method expressed by using a text, to indicate that the confidence value is determined based on the confidence type by using the Bayesian classification method.

b. A keyword corresponding to the confidence type is used as the identifier of the confidence type.

For example, it is assumed that a correspondence between a confidence type and a keyword shown in Table 1 is set.

**Table 1: Correspondence between a confidence value calculation method and a keyword**

| Confidence type | Keyword |
|---|---|
| The confidence value is usually directly obtained through calculation by using a Bayesian learning method. | Posteriori probability |
| The confidence value is obtained based on a neural network or by using another method, where a mathematical meaning is an approximate estimation of the posteriori probability. | Posteriori probability estimation |
| The confidence value is obtained through calculation based on an algorithm randomness theory, where a mathematical meaning is a randomness measurement value. | Randomness measurement value |
| The confidence value is a membership degree value obtained based on a membership degree function in fuzzy mathematics. | Membership degree |
| The confidence value is accuracy obtained based on statistics in a plurality of tests and experiments. | Statistics in tests and experiments |

For example, it is assumed that the confidence value of the recognition result of the vehicle A for the target object is directly obtained through calculation by using the Bayesian learning method. In this case, the recognition information reported by the vehicle A includes the posteriori probability expressed by using a text, to indicate that the confidence value is determined based on the confidence type by using the Bayesian classification method.

c. A sequence number corresponding to the confidence type is used as the identifier of the confidence type.

For example, it is assumed that a correspondence between a confidence type and a sequence number shown in Table 2 is set.

**Table 2: Correspondence between a confidence value calculation method and a sequence number**

| Confidence type | Sequence number |
|---|---|
| The confidence value is usually directly obtained through calculation by using a Bayesian learning method. | 1 |
| The confidence value is obtained based on a neural network or by using another method, where a mathematical meaning is an approximate estimation of the posteriori probability. | 2 |
| The confidence value is obtained through calculation based on an algorithm randomness theory, where a mathematical meaning is a randomness measurement value. | 3 |
| The confidence value is a membership degree value obtained based on a membership degree function in fuzzy mathematics. | 4 |
| The confidence value is accuracy obtained based on statistics in a plurality of tests and experiments. | 5 |

For example, it is assumed that the confidence value of the recognition result of the vehicle A for the target object is directly obtained through calculation by using the Bayesian learning method. In this case, the recognition information reported by the vehicle A includes a sequence number 1 expressed by using a text or 1 expressed in a binary system.

The confidence value in this embodiment of this application may be obtained by using some user-defined methods other than the foregoing five types of mainstream calculation methods. This is not specifically limited. Any method that can be used for calculating the confidence value of the recognition result in embodiments of this application shall fall within the protection scope of this application.

To more clearly show the technical solutions provided in this application, the following describes the method for processing reported information provided in this application by using a plurality of embodiments.

It should be noted that the following descriptions are merely examples of the technical solutions provided in this application, and do not constitute any limitation on the technical solutions provided in this application. Any combination and variation of the following embodiments for obtaining a manner of resolving the technical problem in this application shall fall within the protection scope of this application.

Embodiment 1: Recognition information that is of a target object and that is reported by a vehicle to a cloud server includes a recognition result of the target object, a confidence value of the recognition result, and a confidence type used for determining the confidence value.

Based on the manner in Embodiment 1, the following selects different scenarios for example description. This is not specifically limited to the following scenarios:
Scenario 1: A collection apparatus actively performs recognition on and performs reporting for the target object.

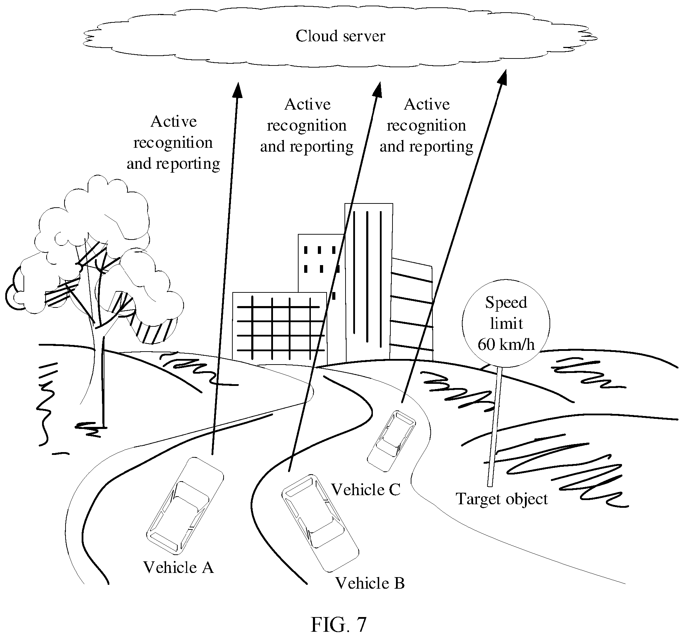

It is assumed that a current scenario of processing reported information is shown in FIG. 7, and the target object is a newly disposed speed limit sign on a road. There are three vehicles that collect information about the target object: respectively a vehicle A, a vehicle B, and a vehicle C.

After actively completing collection of the information about the target object, the vehicle A, the vehicle B, and the vehicle C report the recognition information of the target object to the cloud server. The recognition information includes a recognition result, a confidence value, and a confidence type.

For example, when being driven to this road section, the vehicles A, B, and C each use a sensing apparatus and/or a camera collection apparatus of the vehicle to recognize a new object, that is, the target object appearing on a left side of the road, and the vehicles A, B, and C find that the target object does not exist at this location on an original map.

Therefore, the vehicles A, B, and C actively perform collection for the target object, determine the recognition information of the target object, and report the recognition information of the target object to the cloud server.

After receiving the recognition information reported by the vehicle A, the vehicle B, and the vehicle C for the target object, the cloud server analyzes the recognition information reported by the vehicle A, the vehicle B, and the vehicle C, to determine a final result of the target object.

Preferably, in this embodiment of this application, the cloud server analyzes the recognition information that is of the target object and that is received within a threshold duration, and determines the final result of the target object.

In this embodiment of this application, there are a plurality of manners of setting the threshold duration. The manners are not specifically limited to the following several manners:
In a manner 1 of setting the threshold duration, in this embodiment of this application, when the cloud server needs to obtain the recognition information of the target object, the cloud server selects one duration from at least one preset duration as the threshold duration.

In a manner 2 of setting the threshold duration, in this embodiment of this application, the cloud server selects, as the threshold duration, one duration from received durations reported by at least one vehicle.

For example, the cloud server determines, as the threshold duration, received duration reported by a first vehicle.

In an optional manner, the vehicle may add the reported duration to the recognition information that is of the target object and that is reported to the cloud server.

For example, after receiving a first piece of recognition information reported for the target object, the cloud server starts a timer, and continues to receive recognition information that is reported by another vehicle for the target object. After a timing time of the timer reaches the threshold duration, the cloud server stops receiving the recognition information reported for the target object. The cloud server analyzes the recognition information that is of the target object and that is received within the threshold duration, and determines the final result of the target object.

Through setting the threshold duration, the following problem can be effectively avoided: A map is not updated in time because the cloud server cannot determine a quantity of pieces of recognition information that needs to be analyzed for the target object, and therefore cannot effectively determine the final result of the target object in time.

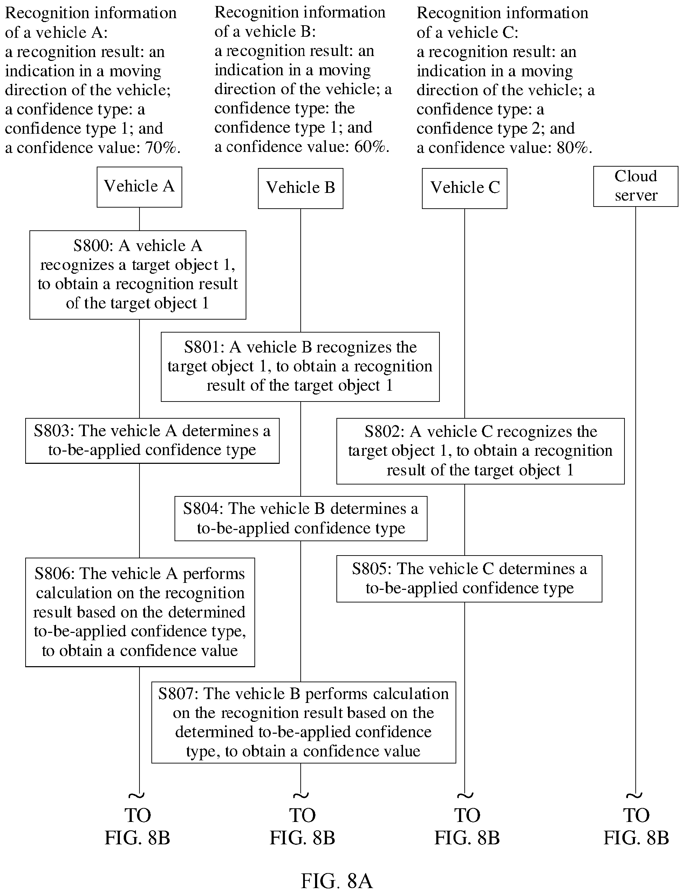

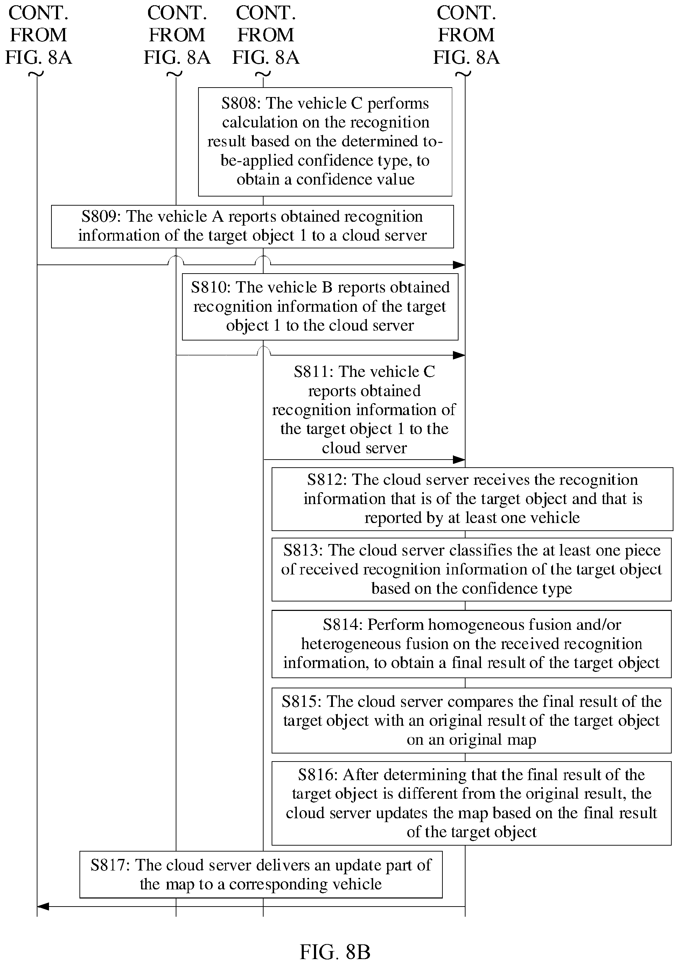

As shown in FIG. 8A and FIG. 8B, based on the foregoing scenario 1, an embodiment of this application provides a first method for processing reported information. A specific procedure includes the following steps:
S800: The vehicle A recognizes a target object 1, to obtain a recognition result of the target object 1.
S801: The vehicle B recognizes the target object 1, to obtain a recognition result of the target object 1.
S802: The vehicle C recognizes the target object 1, to obtain a recognition result of the target object 1.

There is no sequence among steps S800 to S802.

S803: The vehicle A determines a to-be-applied confidence type.

S804: The vehicle B determines a to-be-applied confidence type.

S805: The vehicle C determines a to-be-applied confidence type.

There is no sequence among steps S803 to S805.

In an optional manner, the vehicle may preset a to-be-applied confidence type. To be specific, the vehicle may use the confidence type to determine a corresponding confidence value for each subsequent recognition result of the target object.

In another optional manner, after obtaining the recognition result of the target object, the vehicle determines a confidence type used for calculating a confidence value for the recognition result. To be specific, the vehicle may determine a used confidence type based on recognition results of different target objects according to an actual case.

S806: The vehicle A performs calculation on the recognition result based on the determined to-be-applied confidence type, to obtain a confidence value.

S807: The vehicle B performs calculation on the recognition result based on the determined to-be-applied confidence type, to obtain a confidence value.

S808: The vehicle C performs calculation on the recognition result based on the determined to-be-applied confidence type, to obtain a confidence value.

S809: The vehicle A reports obtained recognition information of the target object 1 to the cloud server. The recognition information includes the recognition result, the confidence value, and the confidence type.

For example, in this embodiment of this application, when reporting the recognition result, the confidence value, and the corresponding confidence type to the cloud server, the vehicle may encapsulate the recognition result, the confidence value, and the confidence type of the target object into reported packet content, and send the packet content to the cloud server.

It is assumed that content of the recognition information reported by the vehicle A for the target object 1 is as follows:
the recognition result: an indication in a moving direction of the vehicle; the confidence type: a confidence type 1; and the confidence value: 70%.

S810: The vehicle B reports obtained recognition information of the target object 1 to the cloud server.

It is assumed that content of the recognition information reported by the vehicle B for the target object 1 is as follows:
the recognition result: an indication in a moving direction of the vehicle; the confidence type: the confidence type 1; and the confidence value: 60%.

S811: The vehicle C reports obtained recognition information of the target object 1 to the cloud server.

It is assumed that content reported by the vehicle C for the target object 1 is as follows:
the recognition result: an indication in a moving direction of the vehicle; the confidence type: a confidence type 2; and the confidence value: 80%.

S812: The cloud server receives the recognition information that is of the target object and that is reported by at least one vehicle.

For example, the cloud server receives the recognition information reported by the three vehicles for the same target object.

Preferably, to prevent a case in which the cloud server infinitely waits for the recognition information reported by the vehicle for the target object, and therefore time validity in updating the map is affected, the cloud server analyzes and processes only a packet that is reported by a vehicle and that is received within the threshold duration.

For example, after receiving the packet reported by the first vehicle for the target object 1, the cloud server starts the timer; and receives, within the preset duration, packets reported by a second vehicle and a third vehicle for the target object 1. In this case, the cloud server analyzes only the packets reported by the first three vehicles.

S813: The cloud server classifies the at least one piece of received recognition information of the target object based on the confidence type.

Specifically, the cloud server classifies, into M types in total, N pieces of received recognition information of the same target object based on the confidence type. Herein, M is less than or equal to N.

In other words, if confidence types included in the N pieces of recognition information of the same target object that are received by the cloud server are all different, each piece of recognition information needs to be classified into one type, that is, N types in total.

If at least two of the N pieces of recognition information of the same target object that are received by the cloud server use the same confidence type, recognition information including the same confidence type needs to be classified into one type. Therefore, a classification quantity is less than N types.

S814: The cloud server performs homogeneous fusion and/or heterogeneous fusion on the received recognition information, to obtain a final result of the target object.

If the cloud server classifies the N pieces of received recognition information into the M types, when M is 1, the N pieces of received recognition information all include the same confidence type. In this case, the cloud server performs homogeneous fusion on the received recognition information, to obtain the final result of the target object.

If the cloud server classifies the N pieces of received recognition information into the M types, when M=N, that is, the N pieces of received recognition information include different confidence types, the cloud server performs heterogeneous fusion on the received recognition information, to obtain the final result of the target object.

If the cloud server classifies the N pieces of received recognition information into the M types, when M<N, that is, the N pieces of received recognition information include recognition information including the same confidence type, the cloud server needs to first perform homogeneous fusion on the recognition information in the same group after the classification to obtain a homogeneous fusion result (that is, group recognition information) of the recognition information in the group, and then perform heterogeneous fusion on the group recognition information obtained for each group to obtain the final result of the target object.

S815: The cloud server compares the final result of the target object with an original result of the target object on an original map.

S816: After determining that the final result of the target object is different from the original result, the cloud server updates the map based on the final result of the target object.

Step S816 further includes a case in which the target object does not exist on the original map. This case may be understood as follows: The final result of the target object is different from the original result.

S817: The cloud server delivers an update part of the map to a corresponding vehicle.

It should be noted that a sequence adjustment and deletion may be performed on the steps shown in FIG. 8A and FIG. 8B in this embodiment of this application according to an actual case. This is not specifically limited in this embodiment of this application. For example, steps S815 and S816 may be integrated into one step. To be specific, comparison does not need to be performed, and a corresponding map region is directly updated based on the obtained final result of the target object.

Scenario 2: The cloud server indicates the collection apparatus to perform recognition on and perform reporting for the target object.

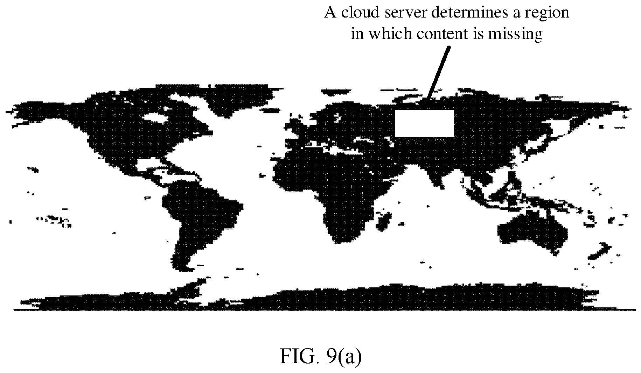

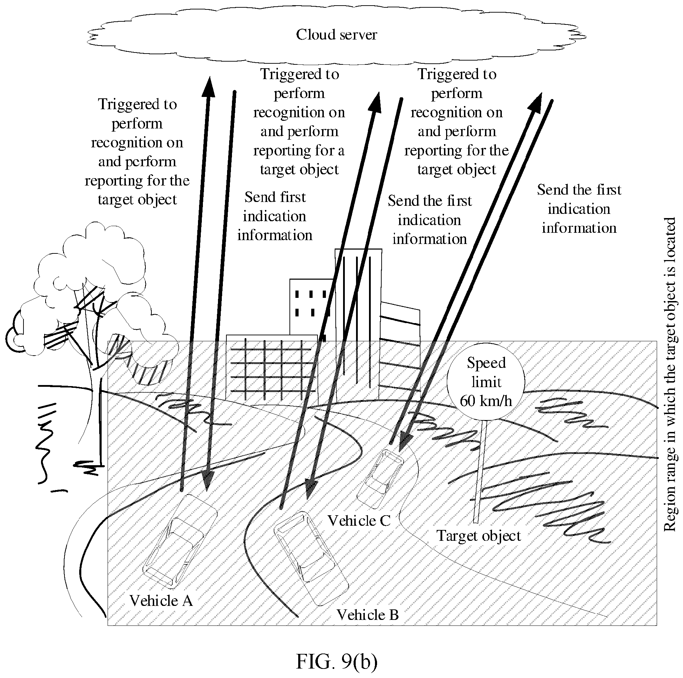

It is assumed that a current scenario of processing reported information is shown in FIG. 9(a) and FIG. 9(b), and the target object is a newly disposed speed limit sign on a road.

The cloud server periodically checks and updates the stored map. In check and update processes, the cloud server finds that data of the target object is missing in a region A on the map. To ensure integrity and accuracy of the map, the cloud server needs to recognize the target object again.

Therefore, the cloud server may send first indication information to a vehicle within a threshold range of the target object, to indicate the vehicle receiving the first indication information to recognize the target object and report recognition information of the target object. The recognition information of the target object includes a recognition result, a confidence value, and a confidence type of the target object.

In this embodiment of this application, there are a plurality of manners of setting the threshold range. The manners are not specifically limited to the following several manners:

In a manner 1 of setting the threshold range, in this embodiment of this application, the cloud server determines a management range of the cloud server as the threshold range.

In a manner 2 of setting the threshold duration, in this embodiment of this application, the cloud server determines a location of the target object, determines the location of the target object as a circle center, obtains a circle center region based on a preset radius, and determines the circle center region as the threshold range.

In a manner 3 of setting the threshold duration, in this embodiment of this application, the threshold range of the cloud server is a preconfigured fixed value.

For example, it is assumed that the vehicle A, the vehicle B, and the vehicle C receive the first indication information sent by the cloud server. Therefore, the vehicle A, the vehicle B, and the vehicle C perform collection for the target object according to an indication of the first indication information, to obtain the recognition information of the target object. The recognition information includes the recognition result, the confidence value, and the confidence type of the target object. Then, the vehicles A, B, and C separately report the recognition information of the target object to the cloud server.

After receiving the recognition information reported by the vehicle A, the vehicle B, and the vehicle C for the target object, the cloud server analyzes the recognition information reported by the vehicle A, the vehicle B, and the vehicle C, to determine a final result of the target object.

Preferably, in this embodiment of this application, the cloud server analyzes the recognition information that is of the target object and that is received within a threshold duration, and determines the determined result of the target object.

For example, after receiving a first piece of recognition information reported for the target object, the cloud server starts a timer, and continues to receive recognition information that is reported by another vehicle for the target object. After a timing time of the timer reaches the threshold duration, the cloud server stops receiving the recognition information reported for the target object. The cloud server analyzes the recognition information that is of the target object and that is received within the threshold duration, and determines the final result of the target object.

Through setting the threshold duration, the following problem can be effectively avoided: A map is not updated in time because the cloud server cannot determine recognition information that needs to be analyzed for the target object, and therefore cannot effectively determine the determined result of the target object in time.

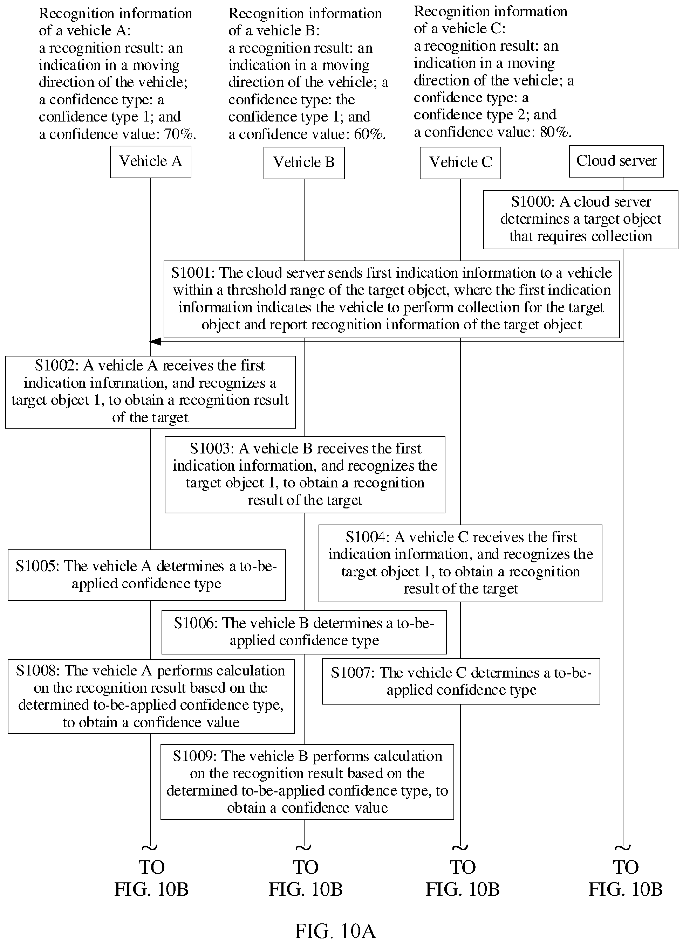

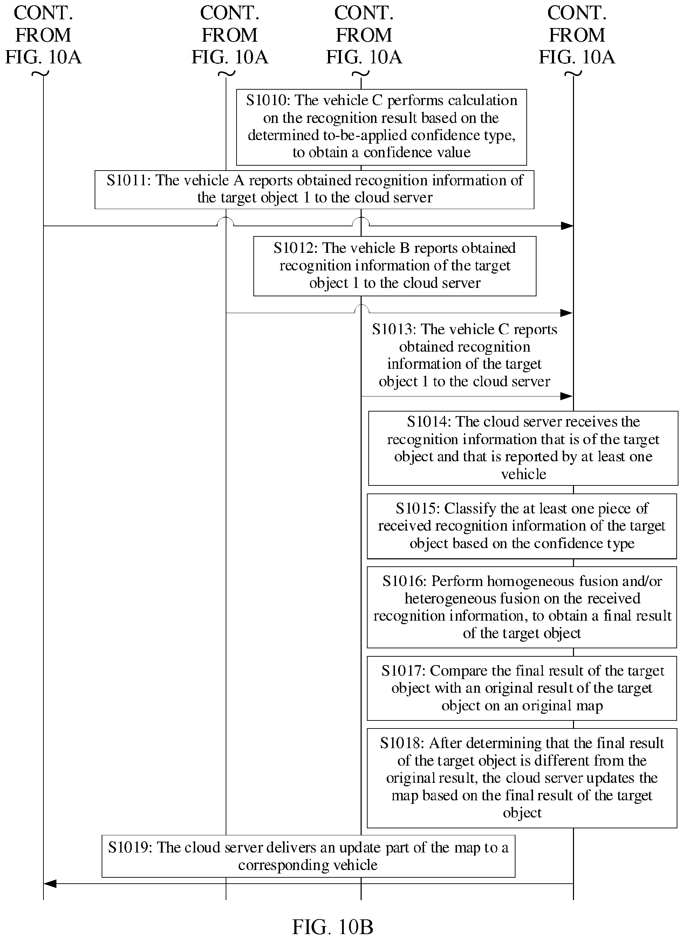

As shown in FIG. 10A and FIG. 10B, based on the foregoing scenario 2, an embodiment of this application provides a method for processing reported information. A specific procedure includes the following steps:
S1000: The cloud server determines the target object that requires collection.
S1001: The cloud server sends the first indication information to the vehicle within the threshold range of the target object. The first indication information indicates the vehicle to perform collection for the target object and report the recognition information of the target object.
S1002: The vehicle A receives the first indication information, and recognizes a target object 1, to obtain a recognition result of the target.
S1003: The vehicle B receives the first indication information, and recognizes the target object 1, to obtain a recognition result of the target.
S1004: The vehicle C receives the first indication information, and recognizes the target object 1, to obtain a recognition result of the target.

There is no sequence among steps S1002 to S1004.

S 1005: The vehicle A determines a to-be-applied confidence type.

S1006: The vehicle B determines a to-be-applied confidence type.

S1007: The vehicle C determines a to-be-applied confidence type.

There is no sequence among steps S1005 to S1007.

In an optional manner, the vehicle may preset a to-be-applied confidence type. To be specific, the vehicle may use the confidence type to determine a confidence value for each subsequent recognition result of the target object.

In another optional manner, after obtaining the recognition result of the target, the vehicle determines a confidence type used for calculating a confidence value for the recognition result. To be specific, the vehicle may determine a used confidence type based on recognition results of different targets according to an actual case.

S1008: The vehicle A performs calculation on the recognition result based on the determined to-be-applied confidence type, to obtain a confidence value.

S1009: The vehicle B performs calculation on the recognition result based on the determined to-be-applied confidence type, to obtain a confidence value.

S1010: The vehicle C performs calculation on the recognition result based on the determined to-be-applied confidence type, to obtain a confidence value.

S1011: The vehicle A reports obtained recognition information of the target object 1 to the cloud server.

It is assumed that content reported by the vehicle A for the target object 1 is as follows:
the recognition result: an indication in a moving direction of the vehicle; the confidence type: a confidence type 1; and the confidence value: 70%.

S1012: The vehicle B reports obtained recognition information of the target object 1 to the cloud server.

It is assumed that content reported by the vehicle B for the target object 1 is as follows:
the recognition result: an indication in a moving direction of the vehicle; the confidence type: the confidence type 1; and the confidence value: 60%.

S1013: The vehicle C reports the obtained recognition result, the confidence value, and the confidence type of the target object 1 to the cloud server.

It is assumed that content reported by the vehicle C for the target object 1 is as follows:
the recognition result: an indication in a moving direction of the vehicle; the confidence type: a confidence type 2; and the confidence value: 80%.

In this embodiment of this application, when reporting the recognition result, the confidence value, and the corresponding confidence type to the cloud server, the vehicle may encapsulate the recognition result, the confidence value, and the confidence type of the target object into reported packet content, and send the packet content to the cloud server.

S1014: The cloud server receives a packet reported by at least one vehicle.

For example, the cloud server receives the recognition information reported by the three vehicles for the same target.

Preferably, to prevent a case in which the cloud server infinitely waits for the packet reported by the vehicle for the target object, and therefore time validity in updating the map is affected, the cloud server analyzes and processes only recognition information that is reported by a vehicle and that is received within the threshold duration.

For example, after receiving the packet reported by the first vehicle for the target object 1, the cloud server starts the timer; and receives, within the preset duration, packets reported by a second vehicle and a third vehicle for the target object 1. In this case, the cloud server analyzes only the packets reported by the first three vehicles.

S1015: The cloud server classifies at least one piece of received recognition information based on the confidence type.

Specifically, the cloud server classifies, into M types in total, N received packets of the same target object based on the confidence type. Herein, M is less than or equal to N.

For specific content, refer to step S810. For brevity of description, details are not described herein again.

S1016: The cloud server performs homogeneous fusion and/or heterogeneous fusion on the received packets, to obtain a determined result of the target object.

For specific content, refer to step S811. For brevity of description, details are not described herein again.

S1017: The cloud server compares the final result of the target object with an original result of the target object on an original map.

S 1018: After determining that the final result of the target object is different from the original result, the cloud server updates the map based on the final result of the target object.

Step S1018 further includes a case in which the target object does not exist on the original map. This case may be understood as follows: The final result of the target object is different from the original result.

S1019: The cloud server delivers an update part of the map to a corresponding vehicle.

It should be noted that a sequence adjustment and deletion may be performed on the steps shown in FIG. 10A and FIG. 10B in this embodiment of this application according to an actual case. This is not specifically limited in this embodiment of this application.

Scenario 3: After receiving recognition information reported by a vehicle for the target object, the cloud server indicates another vehicle to perform recognition on and perform reporting for the target object.

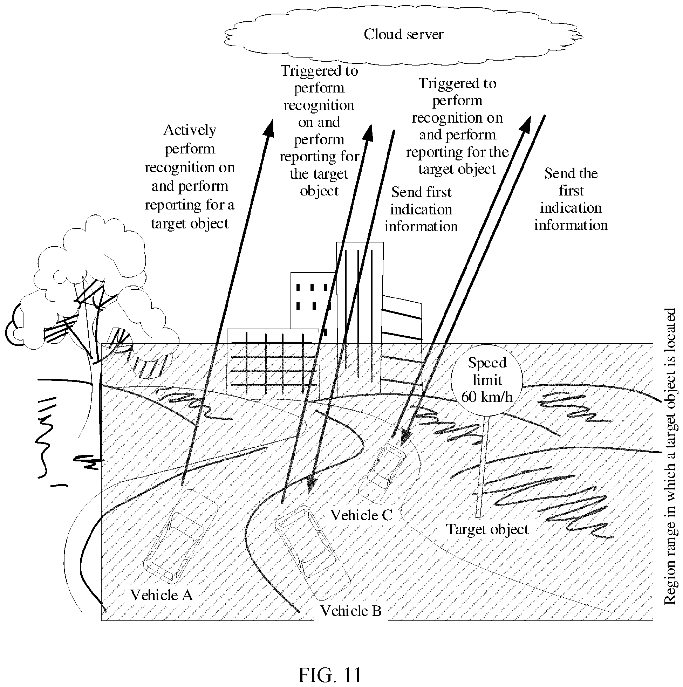

It is assumed that a current scenario of processing reported information is shown in FIG. 11, and the target object is a newly disposed speed limit sign on a road.

When being driven to this road section, the vehicle A uses a sensing apparatus and/or a camera collection apparatus of the vehicle to recognize a new object, that is, the target object appearing on a left side of the road, and the vehicle A finds that the target object does not exist at this location on an original map. Therefore, the vehicle A actively performs collection for the target object, determines the recognition information of the target object, and reports the recognition information of the target object to the cloud server.

After the cloud server receives the recognition information that is of the target object and that is reported by the vehicle A, to avoid erroneous determining caused because the cloud server receives only recognition information that is of the target object and that is reported by one vehicle, the cloud server sends first indication information to another vehicle in a range of a region in which the target object is located, to indicate the vehicle receiving the first indication information to recognize the target object and report recognition information of the target object. The recognition information of the target object includes a recognition result, a confidence value, and a confidence type of the target object.

It is assumed that the vehicle B and the vehicle C receive the first indication information sent by the cloud server. Therefore, the vehicle B and the vehicle C perform collection for the target object according to an indication of the first indication information, to obtain the recognition information of the target object. The recognition information includes the recognition result, the confidence value, and the confidence type of the target object. Then, the vehicles B and C separately report the recognition information of the target object to the cloud server.

After receiving the recognition information reported by the vehicle B and the vehicle C for the target object, the cloud server performs analysis with reference to the previously received recognition information reported by the vehicle A, to determine a determined result of the target object. Alternatively, after receiving the recognition information reported by the vehicle B and the vehicle C for the target object, the cloud server analyzes the recognition information that is of the target object and that is reported by the vehicle B and the vehicle C, to determine a determined result of the target object.

Preferably, in an optional manner of this embodiment of this application, the cloud server analyzes recognition information that is of the target object and that is received within threshold duration after the first indication information is sent, and recognition information that is of the target object and that is received before the first indication information is sent, and determines the determined result of the target object.

Preferably, in another optional manner of this embodiment of this application, the cloud server analyzes the recognition information that is of the target object and that is received within the threshold duration after the first indication information is sent, and determines the determined result of the target object.

For example, after the cloud server receives one piece of recognition information reported for the target object, to avoid erroneous determining caused because the cloud server receives only recognition information that is of the target object and that is reported by one vehicle, the cloud server sends the first indication information to another vehicle in a range of a region in which the target object is located, and starts a timer after sending the first indication information. A running duration of the timer is the threshold duration. The cloud server receives, in a running period of the timer, recognition information reported by the another vehicle for the target object. After a timing time of the timer reaches the threshold duration, the cloud server stops receiving the recognition information reported for the target object.

The cloud server analyzes the recognition information that is of the target object and that is received within the threshold duration, and determines the determined result of the target object. Alternatively, the cloud server analyzes the recognition information that is of the target object and that is received within the threshold duration and the recognition information that is reported for the target object and that is received before the first indication information is sent, and determines the determined result of the target object.

Through setting the threshold duration, the following problem can be effectively avoided: A map is not updated in time because the cloud server cannot determine recognition information that needs to be analyzed for the target object, and therefore cannot effectively determine the determined result of the target object in time.

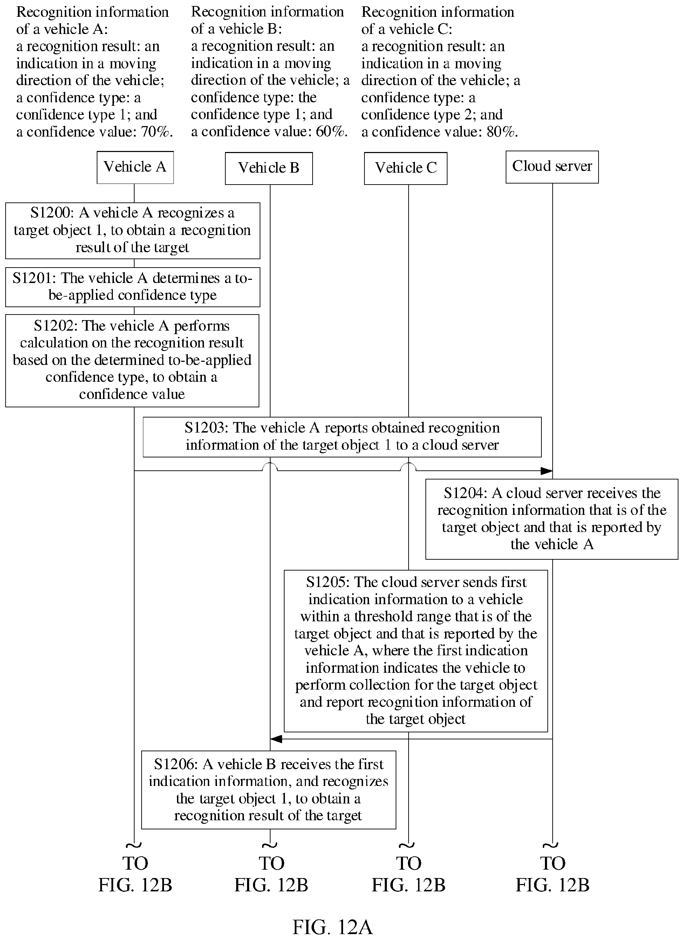

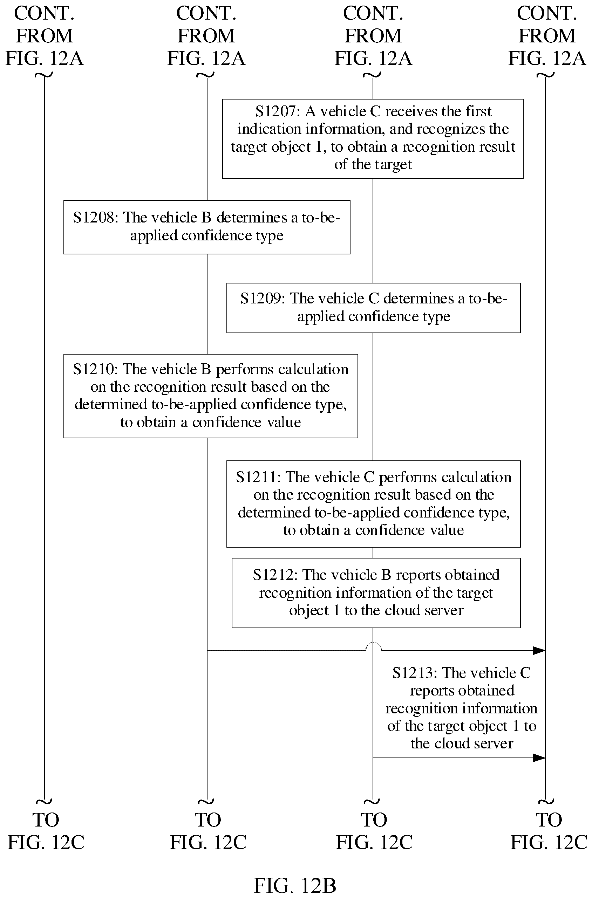

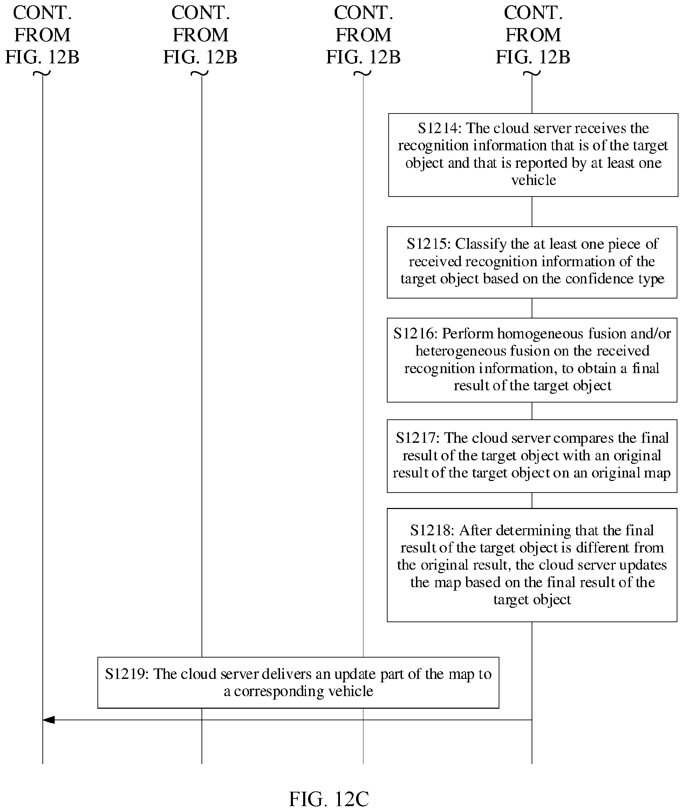

As shown in FIG. 12A, FIG. 12B, and FIG. 12C, based on the foregoing scenario 3, an embodiment of this application provides a method for processing reported information. A specific procedure includes the following steps:
S1200: The vehicle A recognizes a target object 1, to obtain a recognition result of the target.
S 1201: The vehicle A determines a to-be-applied confidence type.

In an optional manner, the vehicle may preset a to-be-applied confidence type. To be specific, the vehicle may use the confidence type to perform determining for each subsequent recognition result of the target.

In another optional manner, after obtaining the recognition result of the target, the vehicle determines a confidence type used for calculating a confidence value for the recognition result. To be specific, the vehicle may determine a used confidence type based on recognition results of different targets according to an actual case.

S1202: The vehicle A performs calculation on the recognition result based on the determined to-be-applied confidence type, to obtain a confidence value.

S 1203: The vehicle A reports obtained recognition information of the target object 1 to the cloud server.

It is assumed that content of the recognition information reported by the vehicle A for the target object 1 is as follows:
the recognition result: an indication in a moving direction of the vehicle; the confidence type: a confidence type 1; and the confidence value: 70%.

S1204: The cloud server receives the recognition information reported by the vehicle A.

S1205: The cloud server sends first indication information to a vehicle within a threshold range that is of the target object and that is reported by the vehicle A. The first indication information indicates the vehicle to perform collection for the target object and report recognition information of the target object.

S1206: The vehicle B receives the first indication information, and recognizes the target object 1, to obtain a recognition result of the target.

S1207: The vehicle C receives the first indication information, and recognizes the target object 1, to obtain a recognition result of the target.

There is no sequence between steps S1206 and S1207.

S1208: The vehicle B determines a to-be-applied confidence type.

S1209: The vehicle C determines a to-be-applied confidence type.

There is no sequence between steps S1208 and S1209.

In an optional manner, the vehicle may preset a to-be-applied confidence type. To be specific, the vehicle may use the confidence type to determine a confidence value for each subsequent recognition result of the target.

In another optional manner, after obtaining the recognition result of the target, the vehicle determines a confidence type used for calculating a confidence value for the recognition result. To be specific, the vehicle may determine a used confidence type based on recognition results of different targets according to an actual case.

S1210: The vehicle B performs calculation on the recognition result based on the determined to-be-applied confidence type, to obtain a confidence value.

S1211: The vehicle C performs calculation on the recognition result based on the determined to-be-applied confidence type, to obtain a confidence value.

S1212: The vehicle B reports obtained recognition information of the target object 1 to the cloud server.

It is assumed that content of the recognition information reported by the vehicle B for the target object 1 is as follows:
the recognition result: an indication in a moving direction of the vehicle; the confidence type: the confidence type 1; and the confidence value: 60%.

S 1213: The vehicle C reports obtained recognition information of the target object 1 to the cloud server.

It is assumed that content reported by the vehicle C for the target object 1 is as follows:
the recognition result: an indication in a moving direction of the vehicle; the confidence type: a confidence type 2; and the confidence value: 80%.

In this embodiment of this application, when reporting the recognition result, the confidence value, and the corresponding confidence type to the cloud server, the vehicle may encapsulate the recognition result, the confidence value, and the confidence type of the target object into reported packet content, and send the packet content to the cloud server.

S1214: The cloud server receives a packet reported by at least one vehicle.

For example, the cloud server receives the recognition information reported by the vehicle B and the vehicle C for the same target.

Preferably, to prevent a case in which the cloud server infinitely waits for the recognition information reported by the vehicle for the target object, and therefore time validity in updating the map is affected, the cloud server analyzes and processes only recognition information that is reported by a vehicle and that is received within the threshold duration.

For example, after sending the first indication information, the cloud server starts a timer, and receives, within preset duration, the recognition information reported by the vehicle C and the vehicle C for the target object 1. In this case, the cloud server analyzes only the recognition information reported by the vehicle B and the vehicle C, and the recognition information that is reported by the vehicle A and that is received before the first indication information is sent.

S1215: The cloud server classifies at least one piece of received recognition information based on the confidence type.

For specific content, refer to step S810. For brevity of description, details are not described herein again.

S1216: The cloud server performs homogeneous fusion and/or heterogeneous fusion on the received recognition information, to obtain a final result of the target object.

For specific content, refer to step S811. For brevity of description, details are not described herein again.

S1217: The cloud server compares the final result of the target object with an original result of the target object on an original map.

S1218: After determining that the final result of the target object is different from the original result, the cloud server updates the map based on the final result of the target object.

Step S1218 further includes a case in which the target object does not exist on the original map. This case may be understood as follows: The final result of the target object is different from the original result.

S1219: The cloud server delivers an update part of the map to a corresponding vehicle.

Embodiment 2: Confidence types used for calculating confidence values by vehicles are unified in advance, so that confidence values received by a cloud server can be directly compared.

In this embodiment of this application, there are a plurality of manners of unifying in advance the confidence types used for calculating the confidence values by the vehicles. The manners are not specifically limited to the following several manners:
In a unifying manner 1, the cloud server determines a confidence type used for calculating a confidence value, and notifies a collection apparatus of the determined confidence type.

In this embodiment of this application, the cloud server may send second indication information to the collection apparatus. The collection apparatus receiving the second indication information is indicated to calculate a confidence value of a recognition result of a target object by using the confidence type indicated in the second indication information, when the confidence value of the recognition result is determined.

It should be noted that, in this embodiment of this application, an occasion on which the cloud server sends the second indication information to the collection apparatus is not limited.

For example, in a first optional manner, in an initialization phase, the cloud server sends the second indication information to all vehicles in a management range, so that the vehicles in the management range of the cloud server determine confidence values of recognition results of the target object based on the confidence type indicated by the cloud server.

Therefore, after receiving the recognition result of the target object and the corresponding confidence value that are reported by the vehicle, the cloud server may directly perform comparison on the received at least one confidence value of the same target object, to determine a final result of the target object.

Further, if a vehicle subsequently driven to the management range of the cloud server does not receive in advance the second indication information sent by the cloud server, or some vehicles fail to receive the second indication information when the cloud server sends the second indication information to the vehicles in the management range, the vehicle that does not receive the second indication information may report the recognition information of the target object with reference to the three scenarios in Embodiment 1.

For example, in a second optional manner, the cloud server periodically sends the second indication information to all vehicles in a management range, so that the vehicles in the management range of the cloud server determine confidence values of recognition results of the target object based on the confidence type indicated by the cloud server. Therefore, after receiving the recognition result of the target object and the corresponding confidence value that are reported by the vehicle, the cloud server may directly perform comparison on the received at least one confidence value of the same target object, to determine a final result of the target object.

For example, in a third optional manner, when determining that the recognition information of the target object needs to be obtained, the cloud server sends the second indication information to a vehicle used to obtain the recognition information of the target object.

For example, with reference to the scenario 2 in Embodiment 1, it is assumed that the cloud server finds that data of the target object is missing in a region A on the map. In this case, the cloud server may send the second indication information to a vehicle within a threshold range of the target object, to indicate the vehicle receiving the second indication information to calculate a confidence value of a recognition result of the target object based on a confidence type 1.

In addition, the cloud server sends first indication information to the vehicle within the threshold range of the target object, to indicate the vehicle receiving the first indication information to recognize the target object and report the recognition result and the confidence value of the target object. A sequence of sending the first indication information and sending the second indication information is not limited in this embodiment of this application.

Preferably, with reference to the scenario 2 in Embodiment 1, it is assumed that the cloud server finds that data of the target object is missing in a region A on the map. In this case, the cloud server may send the first indication information to the vehicle within the threshold range of the target object, to indicate the vehicle receiving the first indication information to recognize the target object, calculate the confidence value of the recognition result of the target object based on the confidence type 1, and report the recognition result and the confidence value of the target object. In other words, in this embodiment of this application, the first indication information further has a function of the second indication information. In other words, the first indication information and the second indication information are the same indication information, thereby reducing signaling overheads.

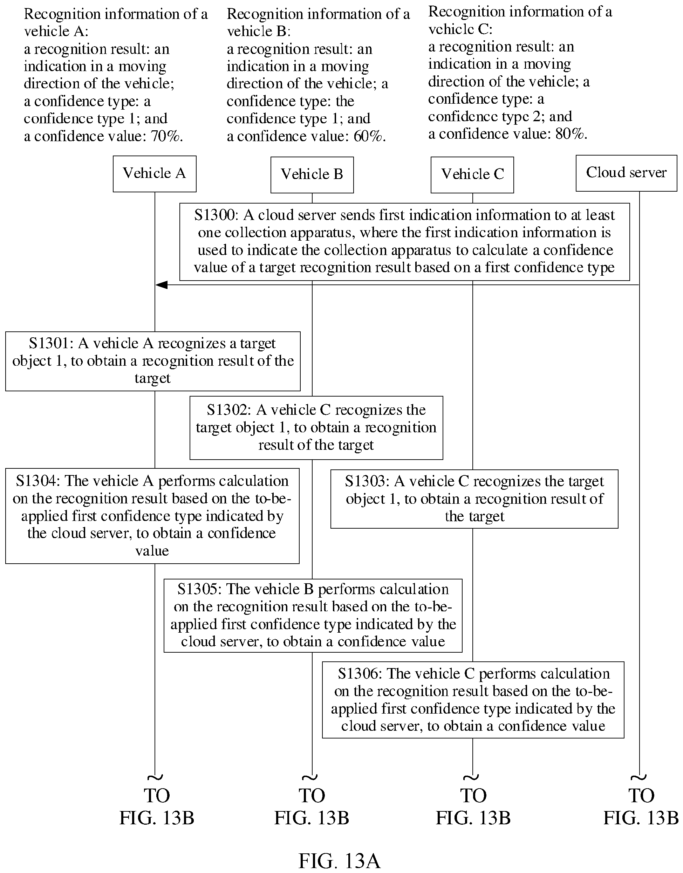

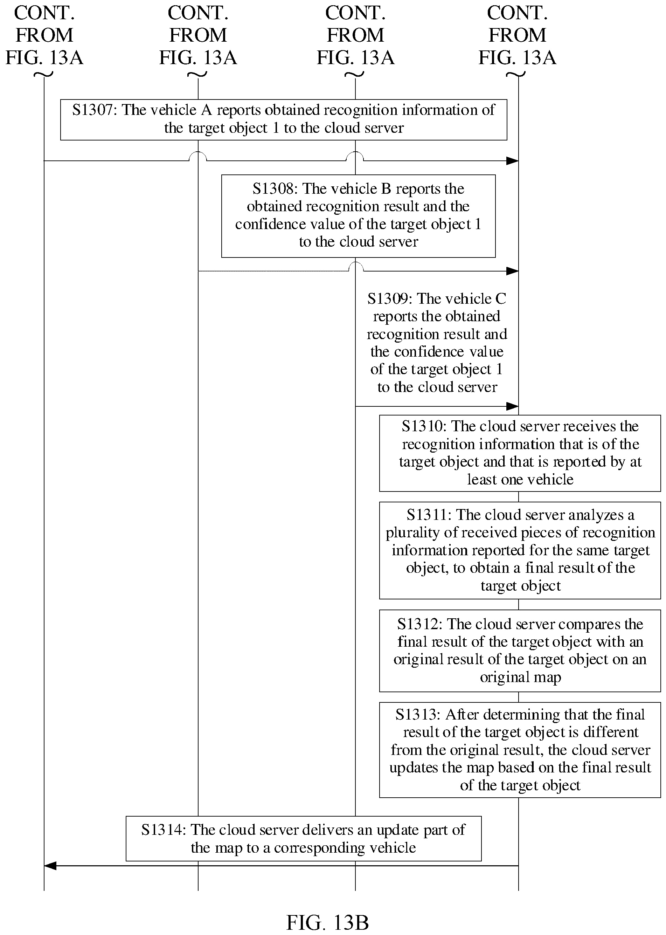

As shown in FIG. 13A and FIG. 13B, based on content of Embodiment 2, an embodiment of this application provides a first method for processing reported information. A specific procedure includes the following steps:
S1300: The cloud server sends the first indication information to at least one collection apparatus. The first indication information is used to indicate the collection apparatus to calculate a confidence value of a target recognition result based on a first confidence type.

It should be noted that step 1300 is that the cloud server periodically sends the first indication information to a vehicle; or step 1300 is that the cloud server sends the first indication information when the cloud server needs to obtain recognition information of a target object; or step 1300 is that the cloud server sends the first indication information to a vehicle during initialization.

In step 1300 in this embodiment of this application, the vehicle to which the cloud server sends the first indication information may be a vehicle in the management range of the cloud server, or a vehicle in an indication region of the cloud server.

It is assumed that a vehicle A, a vehicle B, and a vehicle C receive the first indication information sent by the cloud server.

It should be noted that the information used to indicate the collection apparatus to calculate a confidence value based on the first confidence type in step S1300 may be alternatively the second indication information.

S1301: The vehicle A recognizes a target object 1, to obtain a recognition result of the target.

S1302: The vehicle B recognizes the target object 1, to obtain a recognition result of the target.

S1303: The vehicle C recognizes the target object 1, to obtain a recognition result of the target.

There is no sequence among steps S1301 to S1303.

S1304: The vehicle A performs calculation on the recognition result based on the to-be-applied first confidence type indicated by the cloud server, to obtain a confidence value.

S1305: The vehicle B performs calculation on the recognition result based on the to-be-applied first confidence type indicated by the cloud server, to obtain a confidence value.

S1306: The vehicle C performs calculation on the recognition result based on the to-be-applied first confidence type indicated by the cloud server, to obtain a confidence value.

There is no sequence among steps S1304 to S1306.

S 1307: The vehicle A reports obtained recognition information of the target object 1 to the cloud server.

The recognition information includes the recognition result of the target object 1 and the confidence value of the recognition result.

S 1308: The vehicle B reports the obtained recognition result and the confidence value of the target object 1 to the cloud server.

S 1309: The vehicle C reports the obtained recognition result and the confidence value of the target object 1 to the cloud server.

S1310: The cloud server receives recognition information reported by at least one vehicle.

For example, the cloud server receives the recognition results reported by the three vehicles for the same target, and the corresponding confidence values calculated based on the same confidence type.

Preferably, to prevent a case in which the cloud server infinitely waits for the packet reported by the vehicle for the target object, and therefore time validity in updating the map is affected, the cloud server analyzes and processes only a packet that is reported by a vehicle and that is received within a threshold duration.

For example, after receiving a packet reported by a first vehicle for the target object 1, the cloud server starts a timer; and receives, within the threshold duration, packets reported by a second vehicle and a third vehicle for the target object 1. In this case, the cloud server analyzes only the packets reported by the first three vehicles.

S1311: The cloud server analyzes a plurality of pieces of received recognition information reported for the same target object, to obtain a final result of the target object.

S1312: The cloud server compares the final result of the target object with an original result of the target object on an original map.

S1313: After determining that the final result of the target object is different from the original result, the cloud server updates the map based on the final result of the target object.

Step S1313 further includes a case in which the target object does not exist on the original map. This case may be understood as follows: The final result of the target object is different from the original result.

S1314: The cloud server delivers an update part of the map to a corresponding vehicle.

Further, in actual application, the following cases may further occur:

In a case 1, the cloud server determines that there is one confidence type used for calculating a confidence value, and notifies the collection apparatus of the determined confidence type.

However, there may be some vehicles that receive the notification but do not have a capability of calculating a confidence value based on the confidence type indicated by the cloud server.

In this case, these vehicles each may calculate a confidence value of the target object based on another confidence type, and add the used confidence type to recognition information of the target object when reporting the recognition information.

In a case 2, the cloud server determines that there is one confidence type used for calculating a confidence value, and notifies a reporting end of the determined confidence type.

However, there may be some vehicles that receive the notification but do not have a capability of calculating a confidence value based on the confidence type indicated by the cloud server.

In this case, these vehicles may send request information to the cloud server. The request information is used to request the cloud server to newly change the confidence type used for determining a confidence value.

After receiving the indication request information reported by the vehicles, the cloud server may newly indicate, to these vehicles based on the request information of the vehicles, a confidence type used for determining a confidence value.

In addition, the cloud server records the confidence type indicated to these vehicles. Therefore, after receiving the confidence values that are of recognition results of the target object and that are reported by these vehicles, the cloud server knows a classification status of the confidence values.

Alternatively, after receiving the indication request information reported by the vehicles, the cloud server may newly indicate, to all the vehicles based on the request information of the vehicles, a new confidence type used for determining a confidence value.

In a case 3, the cloud server determines that there are a plurality of confidence types used for calculating a confidence value, and notifies the collection apparatus of the determined confidence types.

However, for a vehicle receiving the notification, because there are a plurality of indicated confidence types, the vehicle may randomly select one from the indicated confidence types to calculate a confidence value of a recognition result.

In this case, the confidence values sent by the collection apparatus to the cloud server may not be directly compared because the used confidence types are not necessarily the same.

In this case, the reporting vehicle may add, to the reported recognition information of the target object with reference to the content of the scenarios 1 to 3 in Embodiment 1, the confidence type used for calculating the confidence value.

The confidence type included in the recognition information is one of the plurality of confidence types that are used for calculating a confidence value and that are indicated by the cloud server.

It should be noted that, if there is a vehicle that does not have a capability of calculating a confidence value based on the confidence type indicated by the cloud server, the vehicle may calculate a confidence value of the target object based on another confidence type, and add the used confidence type to recognition information of the target object when reporting the recognition information.

In a unifying manner 2, the cloud server and the vehicle preconfigure and determine a confidence type used for calculating a confidence value.

In this embodiment of this application, the confidence type used for calculating a confidence value for the cloud server and the vehicle may be manually configured in advance.

For example, a user determines that the confidence type used for calculating a confidence value is a confidence type 1. Therefore, when determining a confidence value of a recognition result of the target object, the vehicle end directly performs determining based on the preconfigured confidence type. After receiving the recognition result and the confidence value of the target object that are reported by the vehicle end, the cloud server may directly perform comparison on the received at least one confidence value.

In embodiments of this application, the term "at least one" means one or more, and "a plurality of" means two or more. The term "and/or" describes an association relationship between associated objects and represents that three relationships may exist. For example, A and/or B may represent the following three cases: Only A exists, both A and B exist, and only B exists. A and B may be in a singular or plural form. The character "/" usually indicates an "or" relationship between associated objects. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c. Herein, a, b, and c may be in a singular form or a plural form.

Unless otherwise stated, ordinal numbers such as "first" and "second" mentioned in embodiments of this application are intended to distinguish a plurality of objects, rather than limit an order, a time sequence, priorities, or importance degrees of the plurality of objects. In addition, the terms "include" and "have" in embodiments, claims, and accompanying drawings of this application are not exclusive. For example, a process, a method, a system, a product, or a device including a series of steps or units is not limited to the listed steps or modules, and may further include steps or modules that are not listed.

Based on the foregoing descriptions of the solutions in this application, it may be understood that, to implement the foregoing functions, the foregoing devices include corresponding hardware structures and/or software units for performing the functions. A person skilled in the art should be easily aware that units, algorithms, and steps in the examples described with reference to embodiments disclosed in this specification can be implemented in a form of hardware or a combination of hardware and computer software in this application. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

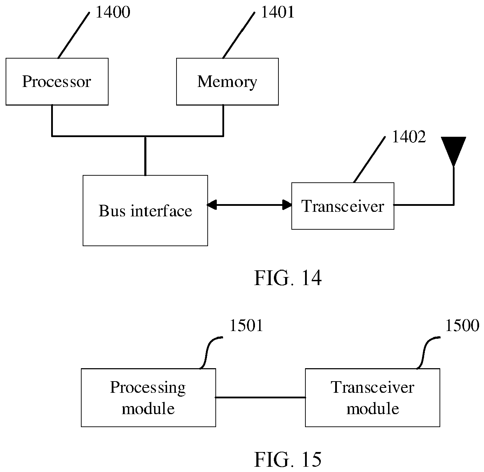

As shown in FIG. 14, an embodiment of this application provides an apparatus for processing reported information. The apparatus for processing reported information includes a processor 1400, a memory 1401, and a transceiver 1402.

The processor 1400 is responsible for managing bus architecture and general processing. The memory 1401 may store data used when the processor 1400 performs an operation. The transceiver 1402 is configured to receive and send data under control of the processor 1400, to perform data communication with the memory 1401.

The bus architecture may include any quantity of interconnected buses and bridges, and specifically links together various circuits of one or more processors represented by the processor 1400 and a memory represented by the memory 1401. The bus architecture may further link together various other circuits such as a peripheral device, a voltage regulator, and a power management circuit. These are well known in the art, and therefore are not further described in this specification. A bus interface provides an interface. The processor 1400 is responsible for managing bus architecture and general processing. The memory 1401 may store data used when the processor 1400 performs an operation.

The procedures disclosed in embodiments of this application may be applied to the processor 1400, or may be implemented by the processor 1400. In an implementation process, steps of a procedure of safe driving monitoring can be completed by using a hardware integrated logic circuit in the processor 1400, or by using instructions in a form of software. The processor 1400 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, or may be any conventional processor or the like. The steps of the method disclosed with reference to embodiments of this application may be directly performed and completed by a hardware processor, or may be performed and completed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory 1401, and a processor 1400 reads information in the memory 1401 and completes the steps in the foregoing signal processing procedure in combination with hardware of the processor 1400.

In an optional manner of this application, the apparatus for processing reported information is a cloud server. The processor 1400 is configured to: read a program in the memory 1401, and perform the method procedure of the cloud server in steps S800 to S814 shown in FIG. 8A and FIG. 8B; or perform the method procedure of the cloud server in steps S1000 to S1019 shown in FIG. 10A and FIG. 10B; or perform the method procedure of the cloud server in steps S1200 to S 1219 shown in FIG. 12A, FIG. 12B, and FIG. 12C; or perform the method procedure of the cloud server in steps S1300 to S1314 shown in FIG. 13A and FIG. 13B.

In another optional manner of this application, if the apparatus for processing reported information is a collection apparatus, for example, a vehicle, the processor 1400 is configured to: read a program in the memory 1401, and perform the method procedure of the collection apparatus in steps S800 to S814 shown in FIG. 8A and FIG. 8B; or perform the method procedure of the collection apparatus in steps S1000 to S1019 shown in FIG. 10A and FIG. 10B; or perform the method procedure of the collection apparatus in steps S1200 to S 1219 shown in FIG. 12A, FIG. 12B, and FIG. 12C; or perform the method procedure of the collection apparatus in steps S1300 to S1314 shown in FIG. 13A and FIG. 13B.

As shown in FIG. 15, this application provides an apparatus for processing reported information. The apparatus includes a transceiver module 1500 and a processing module 1501.

In an optional manner of this embodiment of this application, when the apparatus for processing reported information is a cloud server, the apparatus includes a transceiver module 1500 and a processing module 1501, to perform the following content:
The transceiver module 1500 is configured to receive N pieces of recognition information of a target object from N collection apparatuses. Herein, N is a positive integer. The recognition information includes a recognition result of the target object, a confidence value of the recognition result, and a confidence type used for determining the confidence value.

The processing module 1501 is configured to: divide the N pieces of received recognition information into M groups based on the confidence type in the recognition information, where M is a positive integer not greater than N; determine group recognition information corresponding to each of the M groups; and select one of the M pieces of group recognition information, and determine a recognition result in the selected recognition information as a final result of the target object.

In an implementation, the N pieces of recognition information are received by the cloud server within a threshold duration.

In an implementation, the transceiver module 1500 is further configured to:
send first indication information to a collection apparatus within a second threshold range, where the first indication information is used to indicate the collection apparatus to recognize the target object and report recognition information of the target object.

In an implementation, the transceiver module 1500 is further configured to:
receive the recognition information that is of the target object and that is sent by the collection apparatus whose quantity is less than a threshold quantity.

In an implementation, the first indication information further indicates at least one confidence type for determining the confidence value of the recognition result of the target object.

In an implementation, the transceiver module 1500 is further configured to:
send second indication information to the collection apparatus within the threshold range, where the second indication information indicates at least one confidence type for determining the confidence value of the recognition result of the target object.

In an implementation, each of the M pieces of group recognition information includes the same confidence type.

In an implementation, the processing module 1501 is specifically configured to:
determine recognition information including a maximum confidence value in each group as the group recognition information.

In an implementation, the collection apparatus is a mobile collection apparatus and/or a fixed collection apparatus; and the mobile collection apparatus includes a vehicle, and the fixed collection apparatus includes a roadside unit RSU.

In an implementation, the processing module 1501 is further configured to:
update, based on the final result of the target object, a map region in which the target object is located, and notify at least one collection apparatus of the updated map region.

In an optional manner of this embodiment of this application, when the apparatus for processing reported information is a cloud server, the apparatus includes a transceiver module 1500 and a processing module 1501, to perform the following content:
The transceiver module 1500 is configured to receive N pieces of recognition information of a target object from N collection apparatuses. Herein, N is a positive integer. The recognition information includes a recognition result of the target object and a confidence value of the recognition result. A confidence value in the N pieces of recognition information is determined based on the same confidence type.

The processing module 1501 is configured to: select recognition information including a maximum confidence value from the N pieces of recognition information; and determine a recognition result in the selected recognition information as a final result of the target object.

In an implementation, the N pieces of recognition information are received by the cloud server within a threshold duration.

In an implementation, the transceiver module 1500 is further configured to:
send first indication information to a collection apparatus within a second threshold range, where the first indication information is used to indicate the collection apparatus to recognize the target object and report recognition information of the target object.

In an implementation, the transceiver module 1500 is further configured to:
receive the recognition information that is of the target object and that is sent by the collection apparatus whose quantity is less than a threshold quantity.

In an implementation, the first indication information further indicates that the preset confidence type is a first confidence type.

In an implementation, the transceiver module 1500 is further configured to:
send, by the cloud server, second indication information to the collection apparatus within the threshold range, where the second indication information is used to indicate that the preset confidence type is a first confidence type.

In an implementation, the collection apparatus is a mobile collection apparatus and/or a fixed collection apparatus; and the mobile collection apparatus includes a vehicle, and the fixed collection apparatus includes a roadside unit RSU.

In an implementation, the processing module 1501 is further configured to:
update, based on the final result of the target object, a map region in which the target object is located, and notify at least one collection apparatus of the updated map region.

In an optional manner of this embodiment of this application, when the apparatus for processing reported information is a collection apparatus, the apparatus includes a transceiver module 1500 and a processing module 1501, to perform the following content:
The processing module 1501 is configured to determine recognition information of a target object. The recognition information includes a recognition result of the target object, a confidence value of the recognition result, and a confidence type used for determining the confidence value.

The transceiver module 1500 is configured to send the recognition information of the target object to a cloud server, so that the cloud server updates a map region in which the target object is located.

In an implementation, the transceiver module 1500 is further configured to:
receive first indication information from the cloud server, where the first indication information is used to indicate the collection apparatus to recognize the target object and report recognition information of the target object.

In an implementation, the transceiver module 1500 is further configured to:
receive the recognition information that is of the target object and that is sent by the collection apparatus whose quantity is less than a threshold quantity.

In an implementation, the first indication information further indicates at least one confidence type for determining the confidence value of the recognition result of the target object.

In an implementation, the transceiver module 1500 is further configured to:
receive second indication information from the cloud server, where the second indication information indicates at least one confidence type for determining the confidence value of the recognition result of the target object.

In an implementation, the collection apparatus is a mobile collection apparatus and/or a fixed collection apparatus; and the mobile collection apparatus includes a vehicle, and the fixed collection apparatus includes a roadside unit RSU.

In an optional manner of this embodiment of this application, when the apparatus for processing reported information is a collection apparatus, the apparatus includes a transceiver module 1500 and a processing module 1501, to perform the following content:
The processing module 1501 is configured to determine recognition information of a target object. The recognition information includes a recognition result of the target object and a confidence value of the recognition result. The confidence value of the recognition result is determined based on a preset confidence type.

The transceiver module 1500 is configured to send the recognition information of the target object to a cloud server, so that the cloud server updates a map region in which the target object is located.

In an implementation, the transceiver module 1500 is further configured to:
receive first indication information from the cloud server, where the first indication information is used to indicate the collection apparatus to recognize the target object and report recognition information of the target object.

In an implementation, the transceiver module 1500 is further configured to:
receive the recognition information that is of the target object and that is sent by the collection apparatus whose quantity is less than a threshold quantity.

In an implementation, the first indication information further indicates that the preset confidence type is a first confidence type.

In an implementation, the transceiver module 1500 is further configured to:
receive second indication information from the cloud server, where the second indication information is used to indicate that the preset confidence type is the first confidence type.

In an implementation, the collection apparatus is a mobile collection apparatus and/or a fixed collection apparatus; and the mobile collection apparatus includes a vehicle, and the fixed collection apparatus includes a roadside unit RSU.

Functions of the transceiver module 1500 and the processing module 1501 shown in FIG. 15 may be executed by the processor 1400 through running a program in the memory 1401, or may be independently executed by the processor 1400.

In some possible implementations, aspects of the method for processing reported information provided in embodiments of this application may be further implemented in a form of a program product. The program product includes program code. When the program code is run on a computer device, the program code is used to enable the computer device to perform the steps in the method for processing reported information according to various example implementations of this application described in this specification.

The program product may use any combination of one or more readable media. The readable medium may be a readable signal medium or a readable storage medium. For example, the readable storage medium may be, but is not limited to, an electrical, a magnetic, an optical, an electromagnetic, an infrared, or a semiconductor system, apparatus, or device, or any combination thereof. A more specific example (a non-exhaustive list) of the readable storage medium includes an electrical connection based on one or more conducting wires, a portable disk, a hard disk, a random access memory (RAM), a read-only memory (ROM), an erasable programmable read-only memory (EPROM or flash memory), an optical fiber, a portable compact disk read-only memory (CD-ROM), an optical storage component, a magnetic storage component, or any proper combination of the foregoing content.

A program product for processing reported information according to an implementation of this application may use a portable compact disc read-only memory (CD-ROM) and include program code, and may be run on a server device. However, the program product in this application is not limited thereto. In this specification, the readable storage medium may be any tangible medium including or storing a program. The program may be communicatively transmitted, or used by or in combination with an apparatus or a device.

The readable signal medium may include a data signal propagated in a baseband or as part of a carrier. The data signal carries readable program code. The propagated data signal may be in a plurality of forms, including but not limited to an electromagnetic signal, an optical signal, or any proper combination thereof. The readable signal medium may be alternatively any readable medium other than the readable storage medium. The readable medium may send, propagate, or transmit a program used by or in combination with a periodic network action system, apparatus, or device.

The program code included in the readable medium may be transmitted by using any proper medium, including but not limited to a wireless medium, a wired medium, an optical cable, an RF medium, or any proper combination thereof.

The program code used to execute the operations of this application may be written in any combination of one or more program design languages. The program design languages include object-oriented program design languages such as Java and C++, and further include a conventional procedural program design language such as a "C" language or a similar program design language. The program code may be all executed on a computing device of a user, partially executed on user equipment, executed as an independent software package, partially executed on a computing device of a user and partially executed on a remote computing device, or all executed on a remote computing device or server. When the program code is executed on the remote computing device, the remote computing device may be connected to the computing device of the user by using any type of network, including a local area network (LAN) or a wide area network (WAN), or may be connected to an external computing device.

An embodiment of this application further provides a computing device readable storage medium for the method for processing reported information, so that content is not lost after a power failure. The storage medium stores a software program including program code. When the program code is run on a computing device, any solution of the method for processing reported information in the foregoing embodiments of this application can be implemented when the software program is read and executed by one or more processors.

This application is described above with reference to the block diagrams and/or flowcharts of the method, the apparatus (system), and/or the computer program product in embodiments of this application. It should be understood that a block of the block diagrams and/or flowcharts and a combination of blocks in the block diagrams and/or flowcharts can be implemented by using computer program instructions. These computer program instructions may be provided to a processor of a general-purpose computer, a processor of a dedicated computer, and/or another programmable data processing apparatus to produce a machine, so that the instructions executed by the processor of the computer and/or the another programmable data processing apparatus create a method for implementing a specific function/action in the block in the flowcharts and/or block diagrams.

Correspondingly, this application may be further implemented by using hardware and/or software (including firmware, resident software, microcode, and the like). Still further, this application may be in a form of a computer program product on a computer-usable or computer-readable storage medium. The computer program product has computer-usable or computer-readable program code implemented in the medium, so that the computer-usable or computer-readable program code is used by an instruction execution system or used in combination with an instruction execution system. In the context of this application, the computer-usable or computer-readable medium may be any medium, and may include, store, communicate, transmit, or transfer a program, for use by an instruction execution system, apparatus, or device or use in combination with an instruction execution system, apparatus, or device.

In this application, a plurality of embodiments are described in detail with reference to a plurality of flowcharts. However, it should be understood that the flowcharts and related descriptions of embodiments corresponding to the flowcharts are merely examples for ease of understanding, and shall not constitute any limitation on this application. Each step in each flowchart is not necessarily mandatory. For example, some steps can be skipped. In addition, an execution sequence of the steps is not fixed, and is not limited to that shown in the figure. The execution sequence of the steps should be determined according to functions and internal logic of the steps.

A plurality of embodiments described in this application may be randomly combined or steps may be performed in a cross manner. An execution sequence of embodiments and an execution sequence of the steps in embodiments are not fixed, and are not limited to those shown in the figure, an execution sequence of embodiments and a cross-execution sequence of the steps of embodiments should be determined according to functions and internal logic of embodiments.

Although this application is described with reference to specific features and all embodiments thereof, it is clear that various modifications and combinations may be made to them without departing from the scope of this application. Correspondingly, this specification and the accompanying drawings are merely example description of this application defined by the appended claims, and are considered as any or all of modifications, variations, combinations, or equivalents that cover the scope of this application. It is clear that a person skilled in the art can make various modifications and variations to this application without departing from the scope of this application. In this way, this application is intended to cover these modifications and variations of this application provided that they fall within the scope of the claims of this application and their equivalent technologies.

## Claims

1. A method for processing reported information, wherein the method comprises:
receiving N pieces of recognition information of a target object from N collection apparatuses, wherein N is a positive integer, and the recognition information comprises a recognition result of the target object, a confidence value of the recognition result, and a confidence type used for determining the confidence value;
dividing the N pieces of received recognition information into M groups based on the confidence type in the recognition information, wherein M is a positive integer not greater than N;
determining group recognition information corresponding to each of the M groups; and
selecting one of the M pieces of group recognition information, and determining a recognition result in the selected recognition information as a final result of the target object.

2. The method according to claim 1, wherein the N pieces of recognition information is received by a device within a threshold duration.

3. The method according to claim 1 or 2, wherein before the receiving N pieces of recognition information of a target object from N collection apparatuses, the method further comprises:
sending first indication information to a collection apparatus within a threshold range, wherein the first indication information is used to indicate the collection apparatus to recognize the target object and report recognition information of the target object.

4. The method according to claim 3, wherein before the sending first indication information to a collection apparatus within a threshold range, the method further comprises:
receiving the recognition information that is of the target object and that is sent by the collection apparatus whose quantity is less than a threshold quantity.

5. The method according to claim 3 or 4, wherein the first indication information further indicates at least one confidence type for determining the confidence value of the recognition result of the target object.

6. The method according to any one of claims 1 to 3, wherein before the receiving N pieces of recognition information of a target object from N collection apparatuses, the method further comprises:
sending second indication information to the collection apparatus within the threshold range, wherein the second indication information indicates at least one confidence type for determining the confidence value of the recognition result of the target object.

7. The method according to any one of claims 1 to 6, wherein each of the M pieces of group recognition information comprises the same confidence type.

8. The method according to claim 7, wherein the determining group recognition information corresponding to each of the M groups comprises:
determining recognition information comprising a maximum confidence value in each group as the group recognition information.

9. The method according to any one of claims 1 to 8, wherein the collection apparatus is a mobile collection apparatus and/or a fixed collection apparatus; and
the mobile collection apparatus comprises a vehicle, and the fixed collection apparatus comprises a roadside unit RSU.

10. The method according to any one of claims 1 to 9, wherein the method further comprises:
updating, based on the final result of the target object, a map region in which the target object is located, and notifying at least one collection apparatus of the updated map region.

11. A method for processing reported information, wherein the method comprises:
receiving N pieces of recognition information of a target object from N collection apparatuses, wherein N is a positive integer, and the recognition information comprises a recognition result of the target object and a confidence value of the recognition result, and a confidence value in the N pieces of recognition information is determined based on a preset confidence type;
selecting recognition information comprising a maximum confidence value from the N pieces of recognition information; and
determining a recognition result in the selected recognition information as a final result of the target object.

12. The method according to claim 11, wherein the N pieces of recognition information is received within a threshold duration.

13. The method according to claim 11 or 12, wherein before the receiving N pieces of recognition information of a target object from N collection apparatuses, the method further comprises:
sending first indication information to a collection apparatus within a threshold range, wherein the first indication information is used to indicate the collection apparatus to recognize the target object and report recognition information of the target object.

14. The method according to claim 13, wherein before the sending first indication information to a collection apparatus within a threshold range, the method comprises:
receiving the recognition information that is of the target object and that is sent by the collection apparatus whose quantity is less than a threshold quantity.

15. The method according to claim 13 or 14, wherein the first indication information further indicates that the preset confidence type is a first confidence type.

16. The method according to any one of claims 11 to 13, wherein before the receiving N pieces of recognition information of a target object from N collection apparatuses, the method further comprises:
sending second indication information to the collection apparatus within the threshold range, wherein the second indication information is used to indicate that the preset confidence type is a first confidence type.

17. The method according to any one of claims 11 to 16, wherein the collection apparatus is a mobile collection apparatus and/or a fixed collection apparatus; and
the mobile collection apparatus comprises a vehicle, and the fixed collection apparatus comprises a roadside unit RSU.

18. The method according to any one of claims 11 to 17, wherein the method further comprises:
updating, based on the final result of the target object, a map region in which the target object is located, and notifying at least one collection apparatus of the updated map region.

19. A method for processing reported information, wherein the method comprises:
determining, by a collection apparatus, recognition information of a target object, wherein the recognition information comprises a recognition result of the target object, a confidence value of the recognition result, and a confidence type used for determining the confidence value; and
sending, by the collection apparatus, the recognition information of the target object to a cloud server, so that the cloud server updates a map region in which the target object is located.

20. The method according to claim 19, wherein before the determining, by a collection apparatus, recognition information of a target object, the method further comprises:
receiving, by the collection apparatus, first indication information from the cloud server, wherein the first indication information is used to indicate the collection apparatus to recognize the target object and report recognition information of the target object.

21. The method according to claim 20, wherein the first indication information further indicates at least one confidence type for determining the confidence value of the recognition result of the target object.

22. The method according to claim 19 or 20, wherein before the determining, by a collection apparatus, recognition information of a target object, the method further comprises:
receiving, by the collection apparatus, second indication information from the cloud server, wherein the second indication information indicates at least one confidence type for determining the confidence value of the recognition result of the target object.

23. The method according to any one of claims 19 to 22, wherein the collection apparatus is a mobile collection apparatus and/or a fixed collection apparatus; and
the mobile collection apparatus comprises a vehicle, and the fixed collection apparatus comprises a roadside unit RSU.

24. The method according to any one of claims 19 to 23, wherein the method further comprises that
the mobile collection apparatus comprises a vehicle, and the fixed collection apparatus comprises a roadside unit RSU.

25. A method for processing reported information, wherein the method comprises:
determining, by a collection apparatus, recognition information of a target object, wherein the recognition information comprises a recognition result of the target object and a confidence value of the recognition result, and the confidence value of the recognition result is determined based on a preset confidence type; and
sending, by the collection apparatus, the recognition information of the target object to a cloud server, so that the cloud server updates a map region in which the target object is located.

26. The method according to claim 25, wherein before the determining, by a collection apparatus, recognition information of a target object, the method further comprises:
receiving, by the collection apparatus, first indication information from the cloud server, wherein the first indication information is used to indicate the collection apparatus to recognize the target object and report recognition information of the target object.

27. The method according to claim 26, wherein the first indication information further indicates that the preset confidence type is a first confidence type.

28. The method according to claim 25 or 26, wherein before the determining, by a collection apparatus, recognition information of a target object, the method further comprises:
receiving, by the collection apparatus, second indication information from the cloud server, wherein the second indication information is used to indicate that the preset confidence type is the first confidence type.

29. The method according to any one of claims 25 to 28, wherein the collection apparatus is a mobile collection apparatus and/or a fixed collection apparatus; and
the mobile collection apparatus comprises a vehicle, and the fixed collection apparatus comprises a roadside unit RSU.

30. The method according to any one of claims 25 to 29, wherein the method further comprises that
the mobile collection apparatus comprises a vehicle, and the fixed collection apparatus comprises a roadside unit RSU.

31. An apparatus for processing reported information, comprising:
a transceiver module, configured to receive N pieces of recognition information of a target object from N collection apparatuses, wherein N is a positive integer, and the recognition information comprises a recognition result of the target object, a confidence value of the recognition result, and a confidence type used for determining the confidence value; and
a processing module, configured to: divide the N pieces of received recognition information into M groups based on the confidence type in the recognition information, wherein M is a positive integer not greater than N; determine group recognition information corresponding to each of the M groups; and select one of the M pieces of group recognition information, and determine a recognition result in the selected recognition information as a final result of the target object.

32. An apparatus for processing reported information, comprising:
a transceiver module, configured to receive N pieces of recognition information of a target object from N collection apparatuses, wherein N is a positive integer, and the recognition information comprises a recognition result of the target object and a confidence value of the recognition result, and a confidence value in the N pieces of recognition information is determined based on the same confidence type; and
a processing module, configured to: select recognition information comprising a maximum confidence value from the N pieces of recognition information; and determine a recognition result in the selected recognition information as a final result of the target object.

33. An apparatus for processing reported information, comprising:
a processing module, configured to determine recognition information of a target object, wherein the recognition information comprises a recognition result of the target object, a confidence value of the recognition result, and a confidence type used for determining the confidence value; and
a transceiver module, configured to send the recognition information of the target object to a cloud server, so that the cloud server updates a map region in which the target object is located.

34. An apparatus for processing reported information, comprising:
a processing module, configured to determine recognition information of a target object, wherein the recognition information comprises a recognition result of the target object and a confidence value of the recognition result, and the confidence value of the recognition result is determined based on a preset confidence type; and
a transceiver module, configured to send the recognition information of the target object to a cloud server, so that the cloud server updates a map region in which the target object is located.

35. An apparatus for processing reported information, comprising one or more processors, a memory, and a transceiver, wherein
the memory is configured to store one or more programs and data information, wherein the one or more programs comprise instructions; and
the processor is configured to: based on the at least one or more programs in the memory, perform the method according to any one of claims 1 to 10, or perform the method according to any one of claims 11 to 18, or perform the method according to any one of claims 19 to 24; or perform the method according to any one of claims 25 to 30.

36. A vehicle, comprising at least one camera, at least one memory, at least one transceiver, and at least one processor, wherein
the camera is configured to: perform collection for a target object, and obtain at least one image of the target object;
the memory is configured to store one or more programs and data information, wherein the one or more programs comprise instructions;
the processor is configured to determine recognition information of the target object based on the at least one image, wherein the recognition information comprises a recognition result of the target object, a confidence value of the recognition result, and a type used for determining the confidence value; and
the transceiver is configured to send the recognition information of the target object to a cloud server.

37. A vehicle, comprising at least one camera, at least one memory, at least one transceiver, and at least one processor, wherein
the camera is configured to: perform collection for a target object, and obtain at least one image of the target object;
the memory is configured to store one or more programs and data information, wherein the one or more programs comprise instructions;
the processor is configured to determine recognition information of the target object based on the at least one image, wherein the recognition information comprises a recognition result of the target object and a confidence value of the recognition result, and the confidence value is determined based on a preset confidence type; and
the transceiver is configured to send the recognition information of the target object to a cloud server.

38. A system for processing reported information, comprising at least one collection apparatus and a cloud server, wherein
the collection apparatus is configured to: determine recognition information of a target object, wherein the recognition information comprises a recognition result of the target object, a confidence value of the recognition result, and a confidence type used for determining the confidence value; and send the recognition information of the target object to a cloud server, so that the cloud server updates a map region in which the target object is located; and
the cloud server is configured to: receive N pieces of recognition information of the target object from N collection apparatuses, wherein N is a positive integer, and the recognition information comprises a recognition result of the target object, a confidence value of the recognition result, and a confidence type used for determining the confidence value; divide the N pieces of received recognition information into M groups based on the confidence type in the recognition information, wherein M is a positive integer not greater than N; determine group recognition information corresponding to each of the M groups; and select one of the M pieces of group recognition information, and determine a recognition result in the selected recognition information as a final result of the target object.

39. A system for processing reported information, comprising at least one vehicle and a cloud server, wherein
the collection apparatus is configured to: determine recognition information of a target object, wherein the recognition information comprises a recognition result of the target object and a confidence value of the recognition result, and the confidence value of the recognition result is determined based on a preset confidence type; and send the recognition information of the target object to a cloud server, so that the cloud server updates a map region in which the target object is located; and
the cloud server is configured to: receive N pieces of recognition information of a target object from N collection apparatuses, wherein N is a positive integer, and the recognition information comprises a recognition result of the target object and a confidence value of the recognition result, and a confidence value in the N pieces of recognition information is determined based on a preset confidence type; select recognition information comprising a maximum confidence value from the N pieces of recognition information; and determine a recognition result in the selected recognition information as a final result of the target object.

40. The system for processing reported information according to claim 38 or 39, wherein the collection apparatus is a mobile collection apparatus and/or a fixed collection apparatus; and
the mobile collection apparatus comprises a vehicle, and the fixed collection apparatus comprises a roadside unit RSU.

41. A computer readable storage medium, comprising a computer instruction, wherein when the computer instruction is run on an apparatus for processing reported information, the apparatus for processing reported information is enabled to perform the method according to any one of claims 1 to 10, or perform the method according to any one of claims 11 to 18, or perform the method according to any one of claims 19 to 24, or perform the method according to any one of claims 25 to 30.

42. A computer program product, comprising computer program code, wherein when the computer program code is run by an apparatus for processing reported information, the apparatus for processing reported information is enabled to perform the method according to any one of claims 1 to 10, or perform the method according to any one of claims 11 to 18, or perform the method according to any one of claims 19 to 24, or perform the method according to any one of claims 25 to 30.
